# EUROPÄISCHE PATENTSCHRIFT

(11) **EP 0 820 528 B1**
(45) Veröffentlichungstag und Bekanntmachung des Hinweises auf die Patenterteilung: **03.11.1999**
(21) Anmeldenummer: 96908911.9
(22) Anmeldetag: 09.04.1996
(51) Int. Cl.: C21C 5/52, C21C 5/56, F27B 3/08

(54) **ANLAGE UND VERFAHREN ZUM HERSTELLEN VON EISENSCHMELZEN NACH DEM MEHRZONENSCHMELZVERFAHREN**
IRON SMELTING PROCESS AND PLANT ACCORDING TO THE MULTIPLE ZONE SMELTING PROCESS
PROCEDE ET INSTALLATION DE PRODUCTION DE FONTES EN FER SELON LE PROCEDE DE FUSION EN ZONES MULTIPLES

(30) Priorität: 10.04.1995 AT 62695
(43) Veröffentlichungstag der Anmeldung: 28.01.1998
(73) Patentinhaber: Voest Alpine Industrieanlagenbau Gmbh, 4020 Linz (AT)
(72) Erfinder: DIMITROV, Stefan, A-4030 Linz (AT); RAMASEDER, Norbert, A-4020 Linz (AT); PIRKLBAUER, Wilfried, A-4491 Niederneukirchen (AT); FRITZ, Ernst, A-4020 Linz (AT); MÜLLER, Heinz, A-4501 Neuhofen (AT)
(74) Vertreter: Kopecky, Helmut, Dipl.-Ing. Kopecky & Schwarz Patentanwälte
(86) Internationale Anmeldenummer: AT9600067
(87) Internationale Veröffentlichungsnummer: WO9632505

(56) Entgegenhaltungen:
- EP-A- 0 074 270
- EP-A- 0 240 485
- EP-A- 0 548 041
- DE-A- 1 800 131
- FR-A- 1 482 929
- FR-A- 2 611 876

## Beschreibung

Die Erfindung betrifft eine Anlage zum Herstellen von Eisenschmelzen, insbesondere von Stahlschmelzen, wie Rohstahlschmelzen, sowie ein Verfahren zum Herstellen dieser Schmelzen.

Als Standardaggregat zur Elektrostahlerzeugung dient heutzutage der Wechsel- oder Gleichstrom-Elektro-Lichtbogenofen. Dabei werden die eingesetzten Eisenträger aus
- 70 bis 100 % Stahlschrott, direkt-reduziertem Eisen - Eisenschwamm in verschiedenen Mengenverhältnissen, und gelegentlich auch Eisenkarbid (zur Zeit bis ca. 10 bis 15 % vom Gesamteinsatz)
und
- 0 bis 30 % flüssigem und/oder festem Roheisen
mit Hilfe von einem oder mehreren Lichtbögen unter Verwendung von Sauerstofflanze(n) - gegebenenfalls Brenner(n), Düsen und/oder Inertgasspülung - und Zugabe von Kohlenstoffträgern und Schlackenbildnern niedergeschmolzen. Anschließend wird das Stahlbad während einer Flachbadperiode (5 bis 10 min) im Elektro-Lichtbogenofen auf die zum Abstich erwünschte Temperatur und Zusammensetzung gebracht und beim Abstich in der Pfanne beruhigt. Die Energie- und Stoffverbräuche sowie die Anlagenproduktivität sind in Abhängigkeit von den jeweiligen Einsatzverhältnissen und der Schmelzpraxis recht unterschiedlich.

Durch die weltweite Einführung sekundärmetallurgischer Verfahren sowie einer Reihe von Entwicklungen im konstruktiven, elektrischen und technologischen Bereich des Elektro-Lichtbogenofens selbst, wie z.B.
- gekühlte Paneele und Deckel
- verbesserte Elektrodenqualität und Verwendung einer Elektrodenkühlung
- neben Wechselstrom-Elektro-Lichtbogenöfen, die Einführung auch von Gleichstrom-Elektro-Lichtbogenöfen
- erhöhte Trafoleistungen
- Einsatz von Brennern, Lanzen, Düsen und/oder Spülsteinen zum Schmelzen, Aufheizen, Frischen, Feststoff-Einblasen und/oder Inertgas-Spülen
- Verwendung von stromführenden Elektrodentragarmen sowie einer Elektrodenregelung
- Optimierung von Ofenform und -größe (inklusive Abstichöffnung)
- Schaumschlackenfahrweise
- Schrottvorwärmung unterschiedlicher Ausführung
- Einsatz von Eisenschwamm, gegebenenfalls als Heißeinsatz
hat sich der Elektro-Lichtbogenofen-Schmelzbetrieb innerhalb der letzten zwei Jahrzehnte in ein hinsichtlich Einsatzstoffe und erzeugter Stahlqualität flexibles und leistungsstarkes Verfahren verwandelt, welches immer öfter wesentliche Vorteile gegenüber der Konvertermetallurgie aufweist und diese erfolgreich konkurriert. Vor allem durch die Anwendung von
- integrierter Schrottvorwärmung und/oder Heißeinsatz von Eisenschwamm/heiß brikettiertem direkt reduziertem Eisen
- kontinuierlicher Zugabe eines Großteiles der Einsatzstoffe (Eisenträger, Kohlenstoffträger, Zuschläge etc.) unter Minimierung der power-off-Zeit zur Durchführung von Chargieroperationen
- optimaler Schaumschlackenfahrweise
- billigeren Primärenergien (Kohle, Erdgas etc.) als Ersatz für elektrische Energie inklusive teilweise CO/H₂-Nachverbrennung innerhalb und/oder oberhalb der Schaumschlacke
wurde bei neuen Verfahrensentwicklungen eine bedeutende Schmelzzeitverkürzung und Senkung des spezifischen Elektroenergieverbrauches und somit eine weitere Reduzierung der spezifischen Betriebs- und Investitionskosten der Elektrostahlerzeugung im Elektro-Lichtbogenofen erzielt.

Bei den bekannten Elektrostahlerzeugungsverfahren mit Elektro-Lichtbogenöfen als Schmelzaggregat werden allerdings die potentiellen Vorteile der oben angeführten Verfahrensentwicklungen nur im begrenzten Ausmaß genutzt. Ferner ist es noch nicht gelungen - trotz des zunehmenden Bedarfes - hohe Anteile an flüssigem Roheisen und/oder anderen kohlenstoffreichen Eisenträgern (Eisenschwamm, Eisenkarbid etc.) sowie Problemschrott (Altautos) von ca. 30 bis 70 % im Elektro-Lichtbogenofen-Einsatz mit hoher Produktivität und Energienutzung, und bei Autoschrott außerdem ohne unzulässige Umweltbelastung, zu Flüssigstahl zu verarbeiten. Eine unter solchen Bedingungen wirtschaftlich hoch effektive Technologie und Anlage auf Elektro-Lichtbogenofen-Basis zur Durchführung des Verfahrens steht noch aus.

Die erwähnten Einschränkungen beim konventionellen Elektro-Lichtbogenofen werden ausschließlich durch die Ofenkonfiguration verursacht, welche keinen quasi-stationären, kontinuierlichen Prozeßablauf ermöglicht. Die Operationen Chargieren, Schmelzen, Frischen, Aufheizen und Abstechen erfolgen an einem Ort, zwangsweise mehr oder weniger zeitlich versetzt und mit Unterbrechung(en) der Einsatz- und Stromzuführung - zumindest vor und beim Abstich - um die erwünschte Zusammensetzung und Temperatur (Homogenität und Überhitzung bezüglich der Liquidustemperatur) des Rohstahles zu erreichen. Der gegenwärtige Verfahrensablauf im Elektro-Lichtbogenofen ist diskontinuierlich und infolge dessen leistungsbeschränkt. Diesbezüglich sei folgendes erwähnt:
1) Bei bereits erreichten tap-to-tap-Zeiten von 55 bis 60 min für Abstichgewichte 70 bis 150 t ist die Möglichkeit zur weiteren Verkürzung der power-off-Phasen stark limitiert. Das gleiche gilt auch für die power-on-Phasen - da unter diesen Bedingungen die Grenze für den wirtschaftlichen Energieeintrag pro Tonne Einsatz und Zeiteinheit beinahe erreicht ist - und somit für die gesamte Schmelzzeit.
2) Ab einer gewissen Stückgröße ist das kontinuierliche Chargieren von Schrott schwer durchführbar. Schwerer und sperriger Schrott wird bei power-off mit Schrottkorb zugesetzt.
3) Beim kontinuierlichen Chargieren sowie beim Frischen und Aufheizen im Flachbadbetrieb, dessen Dauer bei hohem Einsatzanteil an Eisenschwamm und insbesondere an flüssigen Roheisen und Eisenkarbid (ca. 6,1 % C) wesentlich zunimmt, wird die vorhandene Trafoleistung bei Elektro-Lichtbogenöfen in der Regel nicht voll ausgenutzt.

Aus der AT-B - 295.566 ist ein Verfahren zur kontinuierlichen Herstellung von Stahl durch Schmelzen von vorreduziertem Erz und anschließendes Frischen der Schmelze von Halbstahl (Semistahl) zu Stahl in einem Lichtbogen-Schmelzofen mit einem Schmelzherd, an den eine Frischzone und mindestens eine Schlackenabsetzkammer angeschlossen sind, bekannt, bei dem vorreduziertes Eisenerz in stückiger oder körniger Form in die Lichtbogenzone des Schmelzherdes eingeführt wird, das Metall im Herd kontinuierlich umgerührt und in Zirkulation gebracht wird und das Metall durch Einblasen von Sauerstoff enthaltendem Gas, während es durch eine Frischzone fließt, zu Stahl gefrischt wird, wogegen Schlacke entlang zumindest eines Teiles der Länge der Frischzone entgegen dem Metall zum Fließen gebracht wird. In einer Schlackenabsetzkammer ohne intensive Baddurchmischung beruhigt sich die Schlacke, die dann aus der Schlackenabsetzkammer abgestochen wird.

Bei diesem bekannten Verfahren können Eigenschrott und geschmolzenes Roheisen eingesetzt werden, jedoch jeweils nur in sehr beschränkten Mengen. Die Abführung der Abgase erfolgt direkt in der Frischzone, also nicht über den Lichtbogen-Schmelzofen. Um ein Einfrieren der Schmelze in der Frischzone zu vermeiden, ist bei dem bekannten Verfahren ein hoher Koks/Kohle-Zusatz erforderlich. Dieses bekannte Verfahren ist daher nur beschränkt einsatzfähig und dient in erster Linie zum Erzeugen von Rohstahl aus vorreduziertem Erz.

Aus der DE-C 3 609 923 ist ein Verfahren und eine Vorrichtung zum fortlaufenden Schmelzen von Schrott zu Rohstahl bekannt. Bei diesem Verfahren, das hauptsächlich auf ein Schrottschmelzen beschränkt ist (ein Einsatz von flüssigem Roheisen oder von direktreduziertem Eisenschwamm ist nicht erwähnt), wird die Wärme des Ofengases zum Erhitzen des Schrotts genutzt. Der Schrott wird in einem zentrisch auf dem Herdofen aufgesetzten Schacht vorgewärmt und zentral in den Herdofen eingebracht, wobei eine Schrottsäule entsteht, welche unter Ausbildung eines Schüttkegels sich auf den Boden des Lichtbogenofens abstützt und bis zur Schrottchargieröffnung im oberen Teil des Schrottvorwärmschachtes hinaufreichen kann. Um die Schrottsäule im Elektro-Lichtbogenofen sind schwenkbare Elektroden (bevorzugt vier Elektroden) symmetrisch angeordnet, mit deren Hilfe der Schrott eingeschmolzen wird. Der Neigungswinkel zwischen Elektroden-Mittelachse und einer Vertikalen beträgt während des Schrottschmelzens für jede Elektrode mehr als 20°. Hierbei ist der Herdofen einer enormen Wärmebelastung ausgesetzt, da die Lichtbögen zwischen der zentrisch eingebrachten Schrottsäule und den Wänden bzw. dem Deckel des Herdofens brennen. Dies führt einerseits zu einem erhöhten Verschleiß der feuerfesten Auskleidung, und damit zu höheren Material- und Zeitkosten zur Durchführung von Reparaturen. Weiters wird ein großer Teil der eingebrachten Energie durch Strahlung an die Ofenwände und den Ofendeckel übertragen und geht verloren. Außerdem ist durch eine mögliche Brückenbildung in der Schrottsäule - oberhalb der in ihr von den Elektroden eingeschmolzenen Schmelzkavernen - ein Nachsturz der Schrottsäule (oder Teilen davon) nicht ausgeschlossen, welcher zu einem Elektrodenbruch führen kann.

Aus der EP-A-0 240 485 ist eine Anlage zur diskontinuierlichen Herstellung von Stahl aus Schrott, mit einem Schachtofenteil und mit einem unmittelbar daran anschließenden Herdofenteil, bekannt. Hierbei wird die im Schachtofenteil ausschließlich aus Schrott erzeugte Stahl-Vorschmelze im Herdofenteil chargenweise weiterverarbeitet. Der Schrott wird im Schachtofenteil mittels Plasmabrennern niedergeschmolzen und die Schmelze fließt über ein Überlaufwehr in den Herdofenteil. Der Schrott wird mittels der Abgase aus dem Herdofen vorgewärmt.

Die Erfindung bezweckt die Vermeidung dieser Nachteile und Schwierigkeiten und stellt sich die Aufgabe, eine Anlage sowie ein Verfahren zum Herstellen von Eisenschmelzen zu schaffen, welche grundsätzlich den Einsatz aller in der Hüttenpraxis anfallender Eisenträger mit unterschiedlichen physikalisch-chemischen Eigenschaften, wie Eisenschrott, flüssiges und/oder festes Roheisen, Eisenkarbid, Eisenschwamm, Eisenerz mit unterschiedlichem Vorreduktionsgrad, Sinter, Zunder, Hüttenstaub, getrockneter Schlämme, etc., ermöglichen, u.zw. in den verschiedensten Mengenzusammenstellungen, so daß beispielsweise bei Auftreten von Engpässen eines Eisenträgers auf einen anderen ohne Kapazitätseinschränkung ausgewichen werden kann. Zugleich soll auch aufbereitete organische Leichtfraktion, z.B. Shredder-Leichtfraktion, zugeführt und als Wärmeträger für den metallurgischen Prozeß genutzt und zugleich entsorgt werden können.

Zur Lösung dieser Aufgabe ist erfindungsgemäß eine Anlage mit folgenden Merkmalen ausgestattet: mit
- einem Elektro-Lichtbogen-Ofengefäß,
- einem an das Ofengefäß über ein Wehr anschließenden Raffinatorgefäß mit einem vom Wehr zumindest teilweise abfallend ausgehenden Boden und einer Sauerstoff-Zuführeinrichtung sowie einem am vom Ofengefäß entfernter liegenden Endbereich angeordneten Eisenschmelzenabstich,
- einem an das Ofengefäß anschließenden und mit dem Ofengefäß einen gemeinsamen Boden aufweisenden Dekantiergefäß, das an seinem vom Ofengefäß entfernter liegenden Endbereich mit einem Schlackenabstich versehen ist,
- einer flüssiges Roheisen zuführenden und in das Ofengefäß mündenden Zuführeinrichtung,
- einem feste Eisenträger zuleitenden Vorwärmschacht, der oberhalb des Ofengefäßes angeordnet ist und über eine gasdurchlässige, gekühlte Absperreinrichtung in das Ofengefäß über dessen Deckel mündet, und
- einem Chargierschacht, der oberhalb des Ofengefäßes angeordnet ist und über eine gasundurchlässige gekühlte Absperreinrichtung in das Ofengefäß mündet.

Die Erfindung betrifft weiters eine Anlage zum Herstellen von Eisenschmelzen, insbesondere von Stahlschmelzen, wie Rohstahlschmelzen, mit
- einem Elektro-Lichtbogen-Ofengefäß,
- einem an das Ofengefäß über ein Wehr anschließenden, nach der Art einer Pfanne ausgebildeten Raffinatorgefäß mit einem Deckel, in dessen Deckelbereich das zwischen dem Ofengefäß und dem Raffinatorgefäß vorgesehene Wehr vorgesehen ist, mit einer Sauerstoff-Zuführeinrichtung sowie einem Eisenschmelzenabstich,
- einem an das Ofengefäß anschließenden und mit dem Ofengefäß einen gemeinsamen Boden aufweisenden Dekantiergefäß, das an seinem vom Ofengefäß entfernter liegenden Endbereich mit einem Schlackenabstich versehen ist,
- einer flüssiges Roheisen zuführenden und in das Ofengefäß mündenden Zuführeinrichtung,
- einem feste Eisenträger zuleitenden Vorwärmschacht, der oberhalb des Ofengefäßes angeordnet ist und über eine gasdurchlässige, gekühlte Absperreinrichtung in das Ofengefäß über dessen Deckel mündet, und
- einem Chargierschacht, der oberhalb des Ofengefäßes angeordnet ist und über eine gasundurchlässige gekühlte Absperreinrichtung in das Ofengefäß mündet.

Vorzugsweise ist der Vorwärmschacht zentral oberhalb des Ofengefäßes angeordnet und ist der Deckel des Ofengefäßes ringförmig, den Vorwärmschacht umgebend und diesen mit Seitenwänden des Ofengefäßes verbindend, ausgestaltet, wobei Elektroden, vorzugsweise Graphitelektroden, schräg, gegebenenfalls senkrecht, durch den Deckel in das Innere des Ofengefäßes ragen. Hierdurch läßt sich eine besonders kurze Schmelzenfolgezeit, d.h. die Zugabe von festen Eisenträgern, wie Schrott, in kurzen Zeitabständen, erzielen, wobei eine effiziente Vorwärmung der festen Eisenträger unter Kontrolle/Regelung ihrer Vorwärmtemperatur und Zufuhrgeschwindigkeit sichergestellt ist.

Vorzugsweise sind die Elektroden schwenkbar und gegebenenfalls in Richtung ihrer Längsachse längsverschieblich gelagert, u.zw. unter Veränderung des zwischen einer Vertikalen und einer Mittelachse der Elektroden vorhandenen Neigungswinkels, vorzugsweise in einem Bereich von 0 bis 30° in Richtung des Zentrums des Ofengefäßes und bis zu 10° in die umgekehrte Richtung zur Wand des Ofengefäßes hin.

Zweckmäßig sind die Elektroden kathodisch geschaltet und ist im Boden des Ofengefäßes mittig eine Bodenanode angeordnet.

Eine besonders universelle Verwendbarkeit der Anlage ist gegeben, wenn die Elektroden als Hohlelektroden ausgebildet sind und entweder an eine Eisenträger-Zufuhreinrichtung und/oder eine Kohle- bzw. Kohlenstoffträger-Zufuhreinrichtung und/oder eine Zufuhreinrichtung für eine aufbereitete organische Leichtfraktion und/oder eine Schlackenbildner-Zufuhreinrichtung und/oder eine Kohlenwasserstoff-Zufuhreinrichtung und/oder eine Inertgas-Zufuhreinrichtung angeschlossen sind.

Vorzugsweise können auch in den Innenraum des Ofengefäßes mündende Düsen und/oder Lanzen vorgesehen sein, die entweder an eine Eisenträger-Zufuhreinrichtung und/oder eine Kohle- bzw. Kohlenstoffträger-Zufuhreinrichtung und/oder eine Zufuhreinrichtung für eine aufbereitete organische Leichtfraktion und/oder eine Schlackenbildner-Zufuhreinrichtung und/oder eine Sauerstoff- bzw. ein sauerstoffhältiges Gas zuführende Zufuhreinrichtung und/oder eine Kohlenwasserstoff-Zufuhreinrichtung und/oder eine Inertgas-Zufuhreinrichtung angeschlossen sind, wobei zweckmäßig die Lanzen beweglich angeordnet sind, insbesondere schwenkbar und/oder in ihrer Längsrichtung bewegbar sind.

Gemäß einer bevorzugten Ausführungsform sind im Raffinatorgefäß Düsen und/oder Lanzen angeordnet, die entweder an eine Eisenträger-Zufuhreinrichtung und/oder eine Kohle- bzw. Kohlenstoffträger-Zufuhreinrichtung und/oder eine Zufuhreinrichtung für eine aufbereitete organische Leichtfraktion und/oder eine Schlackenbildner-Zufuhreinrichtung und/oder eine Sauerstoff- bzw. ein sauerstoffhältiges Gas zuführende Zufuhreinrichtung und/oder eine Kohlenwasserstoff-Zufuhreinrichtung und/oder eine Inertgas-Zufuhreinrichtung angeschlossen sind, wobei zweckmäßig die Düsen als Unterbaddüsen und/oder Bodenspülsteine ausgebildet sind.

Die Lanzen sind hierbei vorteilhaft beweglich angeordnet, insbesondere verschwenkbar und/oder in ihrer Längsrichtung bewegbar.

Um eine vollständige Entleerung des Ofengefäßes auch bei mittiger Anordnung einer Bodenanode zu ermöglichen, ist zweckmäßig das Ofengefäß mit einem in Richtung des Dekantiergefäßes hin abfallenden Boden ausgestattet und geht in einen etwa horizontal liegenden Bodenteil des Dekantiergefäßes über, wobei die tiefste Stelle des Bodens im Dekantiergefäß angeordnet ist, wobei vorteilhaft an der tiefesten Stelle des Bodens des Dekantiergefäßes eine Abstichöffnung vorgesehen ist.

Um eine einfache Kontrolle über den in der Anlage ablaufenden Prozeß auch bei längeren Raffinatorgefäßen zu haben, ist vorteilhaft das Raffinatorgefäß mit mindestens einer Kontroll- und/oder Reparaturöffnung versehen.

Da die Ausmauerung des Raffinatorgefäßes einem stärkeren chemischen Angriff seitens eisenoxidreicher Schlacke und auch einer größeren thermischen Belastung und damit einem größeren Verschleiß als jene des Ofengefäßes ausgesetzt ist, ist es zweckmäßig, wenn das Raffinatorgefäß als eine vom Ofengefäß abtrennbare und austauschbare Baueinheit ausgebildet ist.

Das Metallbadniveau im Ofengefäß und im Raffinator kann gleich oder unterschiedlich sein (z.B. niedriger im Raffinator, in welchem Fall der Betrieb der Anlage ohne Durchlaufbad zwischen Ofengefäß und Raffinator erfolgt).

Um eine effiziente Schlackenführung zu ermöglichen, sind vorteilhaft im Bereich des Überganges vom Ofengefäß zum Raffinatorgefäß ein weiterer Schlackenabstich sowie ein entfernbarer Schlackendamm vorgesehen.

Zwecks leichterer Reparaturmöglichkeit ist vorteilhaft der Vorwärmschacht und/oder der Chargierschacht als vom Ofengefäß abtrennbare und austauschbare Einheit ausgeführt.

Gemäß einer bevorzugten Ausführungsform ist ein Verfahren zum Herstellen von Eisenschmelzen, insbesondere von Stahlschmelzen, wie Rohstahlschmelzen, durch die Kombination folgender Merkmale gekennzeichnet:
- Chargieren von flüssigem Roheisen in einer Menge von 0 % bis 70 % der Gesamtmenge der einzusetzenden Eisenträger in das Ofengefäß,
- Einschmelzen von Schrott und/oder anderen festen Eisenträgern mit oxidischem Eisenanteil (direktreduzierter Eisenschwamm, heißbrikettierter Eisenschwamm, Eisenkarbid, vorreduziertes Erz, Staubbriketts) im Ofengefäß, im wesentlichen in einer den Roheiseneinsatz zum Gesamteinsatz ergänzenden Menge, wobei
- der Schrott zunächst in den Vorwärmschacht chargiert wird
- und durch Abziehen von beim Herstellen der Eisenschmelze entstehenden heißen Abgasen und Einleiten der Abgase in den den vorzuwärmenden Schrott aufnehmenden Vorwärmschacht vorgewärmt wird und
- anschließend in das Ofengefäß chargiert wird, und wobei weiters
- die festen stückigen Eisenträger zunächst in den Chargierschacht chargiert werden und von dort ohne Vorwärmung, jedoch gegebenenfalls im Heißzustand, in das Ofengefäß chargiert werden, während feinkörnige Eisenträger über Lanzen und/oder Düsen und/oder Hohlelektroden ins Ofengefäß und/oder Raffinatorgefäß zugeführt werden,
- die im Ofengefäß eingesetzten Eisenträger mittels Elektro-Lichtbogenenergie eingeschmolzen werden und sich mit dem flüssigen Roheisen vermischen,
- die dabei entstandene Eisenschmelze über das Wehr durch das Raffinatorgefäß zu dem Eisenschmelzenabstich fließt und sowohl im Ofengefäß als auch im Raffinatorgefäß kontinuierlich gefrischt und zugleich aufgeheizt wird, und
- Schlacke in zur Fließrichtung der Eisenschmelze entgegengesetzter Richtung zu dem Schlackenabstich fließen gelassen wird und kontinuierlich bezüglich FeO-Gehalt reduziert und zugleich abgekühlt wird.

Vorteilhaft werden hierbei Prozeßgase durch Zuführen eines sauerstoffhältigen Gases in die und/oder auf die Schlacke und/oder oberhalb derselben in das Raffinatorgefäß, in das Ofengefäß und/oder in den Vorwärmschacht nachverbrannt.

Zweckmäßig wird das Schmelzen des Schrotts durch Einblasen eines sauerstoffhältigen Gases unterstützt.

Das erfindungsgemäße Verfahren ermöglicht breite Einsatzmöglichkeiten, Vorteilhaft erfolgt
- die Zuführung der Einsatzstoffe (Eisenträger, Kohlenstoffträger, Zuschläge, aufbereitete organische Leichtfraktion und Gase),
- Schmelz-, Frisch- und Aufheizvorgänge und
- Abfuhr der Prozeßprodukte (Rohstahl, Schlacke und Abgase)
in den Vorwärmschacht und/oder die Chargierschächte und/oder das Ofengefäß und/oder das Dekantiergefäß und/oder das Raffinatorgefäß
- kontinuierlich oder semikontinuierlich mit diskontinuierlichem Rohstahlabstich vom Raffinatorgefäß und
- ohne Beeinflussung/Unterbrechung des Prozeßablaufes im unmittelbar vor/nachgeschalteten Anlagenteil.

Vorzugsweise wird zur Vermeidung von Rückmischungen der Metallbadspiegel im Raffinatorgefäß niedriger gehalten als im Ofengefäß.

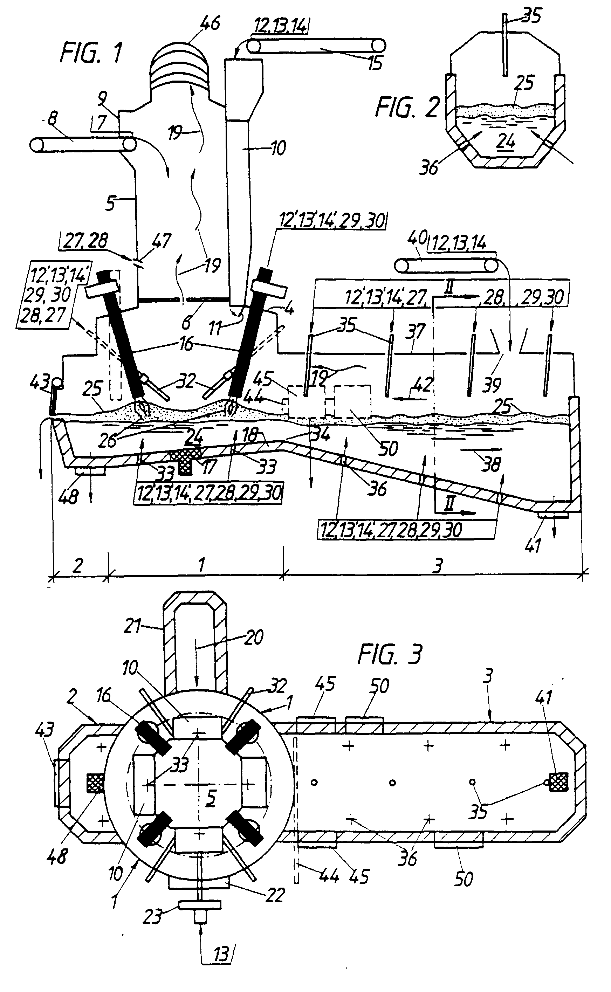

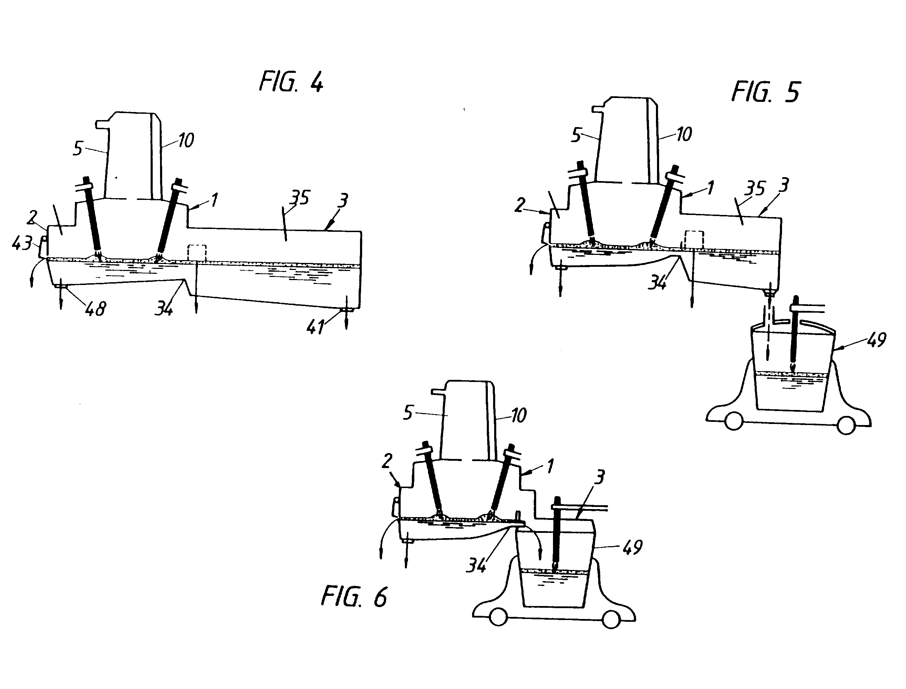

Die Erfindung ist nachfolgend anhand mehrerer in der Zeichnung schematisch dargestellter Ausführungsbeispiele näher erläutert, wobei Fig. 1 einen Vertikalschnitt durch eine erfindungsgemäße Anlage nach einer ersten Ausführungsform und Fig. 2 einen Schnitt nach der Linie II-II der Fig. 1 zeigen. Fig. 3 veranschaulicht eine teilweise geschnittene Draufsicht auf die in Fig. 1 dargestellte Anlage. Die Fig. 4 bis 6 zeigen jeweils alternative Ausführungsformen in zu Fig. 1 analogen Darstellungen.

Ein Ofengefäß 1 eines Gleichstrom-Elektro-Lichtbogenofens ist an einer Seite mit einem Dekantiergefäß 2 und an der gegenüberliegenden Seite mit einem Raffinatorgefäß 3 versehen, u.zw. mit diesen Gefäßen 2 und 3 jeweils unmittelbar verbunden, so daß eine zusammenhängende Anlage mit drei Funktionszonen gebildet ist. Das Ofengefäß 1 des Elektro-Lichtbogenofens dient als Schmelz- bzw. Schmelzreduktionszone, das Raffinatorgefäß 3 als Frisch- und Aufheizzone, und das Dekantiergefäß 2 als Dekantierzone. Mittig, d.h. zentrisch, zum Ofengefäß 1 ist auf dessen Deckel 4 ein Vorwärmschacht 5 mit gasdurchlässiger und wassergekühlter Absperrvorrichtung 6 aufgesetzt, welcher mit metallischen Einsatzstoffen 7 - vor allem Stahlschrott, gegebenenfalls auch festem Roheisen - bevorzugt über ein Förderband 8 durch die Einfüllöffnung 9 beschickbar ist. Parallel zum Vorwärmschacht 5 ist mindestens ein seitlich direkt benachbarter und ebenfalls in das Ofengefäß 1 einmündender Chargierschacht 10 (bevorzugt sind mehrere Chargierschächte) mit gegen den Ofeninnenraum gerichteter gasundurchlässiger und wassergekühlter Absperrvorrichtung 11 vorgesehen, welcher bzw. welche mit festen, stückigen Eisenträgern 12 (direkt-reduziertes Eisen, vorreduziertes Eisenerz, Sinter, Zunder, Filterstaub- und/oder Schlamm-Briketts etc.), und/oder Kohlenstoffträgern 13 (Koks, Preßlinge aus organischer Leichtfraktion etc.) und/oder Schlackenbildnern 14 (Kalk, Flußspat, Quarzsand, Bauxit etc.) über ein Förderband 15 bzw. Förderbänder befüllbar sind. Die Einheit aus dem Ofengefäß 1, Raffinatorgefäß 3, Dekantiergefäß 2, dem aufgesetzten Vorwärmschacht 5 und den seitlichen Chargierschächten 10 bildet das Kernstück der erfindungsgemäßen Anlage.

Das Ofengefäß 1 verfügt über mehrere kathodisch geschaltete, schräge Graphitelektroden 16, die gegebenenfalls als Hohlelektroden ausgeführt sind, bevorzugt in einer symmetrischen Anordnung bezüglich des Elektro-Lichtbogenofens und des aufgesetzten Vorwärmschachtes 5. Die Elektroden 16 sind innerhalb eines Neigungswinkels von 0 bis 30° gegenüber der Vertikalen in Richtung zum Zentrum des Ofengefäßes 1 und bis zu 10° in die umgekehrte Richtung zur Wand des Ofengefäßes 1 hin schwenkbar. Der Neigungswinkel kann für jede einzelne Elektrode 16 unterschiedlich eingestellt bzw. geregelt werden. Er beträgt während des Schmelzbetriebes meist ca. 15 bis 20°. Gelegentlich kann auf die Schwenkbarkeit der Elektroden 16 verzichtet werden. Als Gegenelektrode 17 dient eine im Boden 18 des Ofengefäßes 1 mittig angebrachte Bodenanode.

Die im Vorwärmschacht 5 durch die aufsteigenden, heißen Abgase 19 vorgewärmten metallischen Einsatzstoffe 7 werden kontinuierlich oder portionsweise in das Ofengefäß 1 der Anlage ausschließlich unter Stromzuführung chargiert. Wenn dabei eine Elektrodenbruchgefahr besteht, werden die Elektroden 16 kurzzeitig in Richtung der Wand des Ofengefäßes 1 unter power-on ausgeschwenkt oder nach oben gezogen (power-off). Das Chargieren von Schrott 8 mit hohem Stückgewicht (Brammen- bzw. Knüppelreste, Pakete etc.) findet unter kurzzeitiger Unterbrechung der Stromzuführung und Anhebung der Elektroden 16 statt.

Das Chargieren von festen Eisenträgern 12 mit oxidischem Eisenanteil (Eisenschwamm, vorreduziertes Erz, Staubbriketts etc.) und beim Bedarf - von Kohlenstoffträgen 13, wie Koks, Preßlinge aus organischer Leichtfraktion etc., und Schlackenbildnern 14 (Kalk, Flußspat, Quarzsand, Bauxit etc.) - in den Elektro-Lichtbogenofen erfolgt über die seitlichen Chargierschächte 10 kontinuierlich und/oder portionsweise/diskontinuierlich, u.zw. unabhängig von den Chargieroperationen, die durch den Vorwärmschacht 5 erfolgen.

Ebenfalls davon unabhägnig wird dem Elektro-Lichtbogenofen flüssiges Roheisen 20 über eine in das Ofengefäß 1 einmündende Roheisen- Zufuhreinrichtung 21, die als Rinne ausgebildet ist, kontinuierlich oder portionsweise/diskontinuierlich zugeführt An der der Rinne gegenüberliegenden Seite des Ofengefäßes 1 ist eine Tür 22 zur Prozeßkontrolle, Einführung eines zusätzlichen Lanzenmanipulators 23 und Durchführung von Wartungsarbeiten im Bereich des Ofengefäßes 1 vorgesehen.

Durch die Form der Anlage vorgegeben, erfolgt das Chargieren und Schmelzen im Ofengefäß 1 stets mit Flüssigsumpf 24. Dieser ermöglicht einen nahezu durchgehenden, quasi-stationären Schmelzbetrieb mit Schaumschlacke 25 und von ihr nahezu vollständig umhüllten Lichtbögen 26 und dadurch bei hoher Trafo- und Wärmeeffizienz und geringer Lärmemission.

Ferner wird bzw. werden zur Erfüllung der folgenden Anforderungen
- Verarbeiten von feinkörnigen Eisenträgern 12' (z.B. Eisenkarbid, Eisenschwamm-Siebrückstand, Filterstäuben etc.)
- Erzeugung bzw. Regelung der Schaumschlacke 25
- Beschleunigen des Schmelzvorganges der Einsatzstoffe 7, 12, 13, 14 durch erhöhte Energieeinträge in den Elektro-Lichtbogenofen (inklusive Nachverbrennung von CO und H₂ im Abgas 19 innerhalb bzw. oberhalb der Schaumschlacke 25) und Ausgleich von Konzentrations- und Temperaturgradienten im Schmelzenbad 24 sowie
- Ersatz eines Teiles der benötigten elektrischen Energie durch billigere Primärenergien in das Ofengefäß'1
- feinkörnige Eisenträger 12' und/oder
- feinkörnige Kohle 13' bzw. andere Kohlenstoffträger (aufbereitete organische Leichtfraktion, z.B. Shredder-Leichtfraktion) und/oder
- feinkörnige Schlackenbildner 14' (Kalk, Flußspat etc.) und/oder
- gasförmiger Sauerstoff und/oder andere oxidierende Gase 27 (CO₂, H₂O etc.) sowie Sekundärluft 28 und/oder
- CH₄ bzw. andere Kohlenwasserstoffe 29 und/oder
- Inertgase 30 (N₂, Ar)
in geregelten, an den örtlichen und zeitlichen Bedarf angepaßten Mengen über eine oder mehrere
- Hohlelektroden 16 für das Aufblasen von mindestens einem der oben genannten Stoffe 12', 13', 14', 29, 30 mit Ausnahme von Sauerstoff und sauerstoffhältigen Gasen und/oder
- geschützte und/oder nicht geschützte Düsen und/oder Lanzen 32 (bewegliche und/oder fest eingebaute Lanzen, gegebenenfalls als Kombi-Lanzen/Brenner) an verschiedenen Stellen im Deckel- und Wandbereich des Elektro-Lichtbogenofens oberhalb und/oder unterhalb der Oberfläche der Schlacke für das Auf-/Einblasen von mindestens einem der oben genannten Stoffe 12', 13', 14', 27, 28, 29, 30 und/oder
- geschützte Unterbaddüsen 33 (vorzugsweise Hochdruckdüsen) und/oder Bodenspülsteine oder Unterbaddüsen für Einblasen von mindestens einem der oben angegebenen Stoffe 12', 13', 14', 27 bis 30, bzw. Spülsteine für Inertgase 30
zugeführt. Aus Übersichtlichkeitsgründen sind in Fig. 1 nicht alle diese Einrichtungen eingezeichnet.

Ab einer gewissen Flüssigsumpfmenge 24 läuft die im Ofengefäß 1 gebildete Metallschmelze 24 über ein Wehr 34 in das Raffinatorgefäß 3 und wird dort bis zum Abstich gefrischt und zugleich aufgeheizt. Zu diesem Zweck verfügt das Raffinatorgefäß 3 über mindestens eine, bevorzugt mehrere
- Düsen, u.zw. geschützte (erdgasgeschützte - es kann aber auch Ar, CO₂ und höhere Kohlenwasserstoffe als Schutzgas verwendet werden) und/oder nicht geschützte Düsen (Überbad-Düsen (Nachverbrennung) oder Hochdruckdüsen (Unterbad)) und/oder Lanzen 35 (beweglich und/oder fest eingebaute Lanzen gegebenenfalls als Kombi-Lanzen/Brenner) an verschiedenen Stellen im Deckel- und Wandbereich des Raffinatorgefäßes oberhalb und/oder unterhalb der Oberfläche der Schlacke für Auf-/Einblasen von mindestens einem der Stoffe 12', 13', 14', 27 bis 30 und/oder
- geschützte Unterbaddüsen 36 (vorzugsweise Hochdruckdüsen) und/oder Bodenspülsteine für Einblasen von mindestens einem der Stoffe 12', 13', 14', 27 bis 30 sowie Spülsteine für Inertgase 30, und/oder
- Öffnungen für Zugabe von stückigen Eisenträgern 12, Kohlenstoffträgern 13 und Schlackenbildnern 14 - einzeln oder in Kombination
wobei eine bevorzugte Ausführungsvariante des Raffinatorgefäßes 3 folgendes vorsieht:
- Über mehrere Lanzen 35 wird ausschließlich gasförmiger Sauerstoff 27 aufgeblasen. Die Lanzen 35 sind mittig am Deckel 37 des Raffinatorgefäßes 3 in etwa gleichen Abständen über die Raffinatorlänge angeordnet, sind in die Vertikalrichtung beweglich und können zugleich innerhalb eines Neigungswinkels von ca. 0 bis 30° zur Vertikalen in bzw. gegen die Fließrichtung 38 der Metallschmelze 24 ausgeschwenkt werden.
- Über mehrere zwischen den Lanzen 35 angeordnete, geschützte Unterbaddüsen 36 und/oder Spülsteine wird ausschließlich Inertgas 30 (N₂ und/oder Ar in beliebigen Mischungsverhältnissen) zugeführt. Die Unterbaddüsen 36 und/oder Spülsteine sind mittig am Boden und/oder an den Seitenwänden über die Länge des Raffinatorgefäßes 3 einzeln und/oder paarweise angebracht.
- In das Raffinatorgefäß 3 werden ausschließlich stückige Schlackenbildner 14 (Kalk, Flußspat, Quarzsand, Bauxit etc.) und nur über die Deckelöffnung 39 mit Hilfe des Förderbandes 40 zugeführt.
- An jeder der zwei langen Seiten des Raffinatorgefäßes 3 ist je eine Kontroll- und Reparaturöffnung 50 angebracht. Beide Kontrollöffnungen 50 sind in die Längsrichtung des Raffinatorgefäßes 3 voneinander versetzt.

Die Zugabe der stückigen Schlackenbildner 14 durch die Deckelöffnung 39 im letzten Lanzen-Zwischenabstand in die Fließrichtung des Metalles 24 im Raffinatorgefäß 3 - etwa oberhalb einer Rohstahlabstichöffnung 41 - beschleunigt die Kalkauflösung bzw. die Bildung einer reaktionsfähigen Frischschlacke 25, da mit Hilfe der benachbarten, letzten Sauerstofflanze 35 der Eisenoxidgehalt der Schlacke 25 in diesem Teilbereich des Raffinatorgefäßes 3 stets hoch gehalten wird.

Getrieben durch die eigene Schwerkraft sowie durch den von den Lanzen 35 übertragenen Impuls bewegt sich die Frischschlacke 25 entlang des Raffinatorgefäßes 3 gegenläufig zur Metallschmelze 24 in Richtung des Pfeiles 42 zum Ofengefäß 1, wobei sie auf Metallschmelze 24 mit stets abnehmender Temperatur bzw. zunehmendem Gehalt an Begleitelementen (C, Si, Mn, P, S etc.) trifft und diese aufheizt und frischt bzw. von dieser abgekühlt und reduziert wird. Bei kontinuierlichem Betrieb mit Durchlaufbad über die gesamte Länge der Anlage (wie in Fig. 1 dargestellt) wird die Schlacke 25 durch eine Schlackentür 43 am freien Ende des Dekantiergefäßes 2 abgestochen. Dabei kann die Menge der Schlacke 25 im Ofengefäß 1 und im Dekantiergefäß 2 zusätzlich geregelt werden, indem ein Teilabzug der Schlacke 25 mit Hilfe eines Schlackendammes 44 über eine oder zwei seitlich angeordnete Schlackentür(en) 45 im Raffinatorgefäß - unmittelbar vor dem Eingang der Schlacke in den Elektro-Lichtbogenofen - vorgenommen wird.

Die Vorteile dieser "Metall/Schlacke-Gegenstrombewegung" sind folgende:
1) Geringe Wärme- und Eisenverluste mit der Schlacke 25 beim Verlassen des Dekantiergefäßes 2 über die Schlackentür 43, weil einerseits die Schlacke 25 die Anlage an der "kalten Seite" verläßt und andererseits neben der vor allem im Ofengefäß 1 stattfindenden Eisenoxidreduktion auch ein sogenanntes "Ausregnen" von Metalltröpfchen aus der Schlacke 25 im Dekantiergefäß 2 erfolgt.
2) Erzielung der erwünschten Stahlqualität mit wesentlich geringerem Verbrauch an Schlackenbildnern 14 bzw. geringerer spezifischer Menge der Schlacke 25 (gegebenenfalls ein "schlackenarmes Frischen" möglich) und infolgedessen bei geringerem Feuerfestverschleiß der Anlage.

Bei semi-kontinuierlichem Betrieb der Anlage mit Chargenabstich des Rohstahles 24 vom Raffinatorgefäß 3 wird der Überlauf der Schlacke 25 vom Ofengefäß 1 in das Raffinatorgefäß 3 durch den seitlich einschiebbaren Schlackendamm 44 beschränkt bzw. verhindert.

Die im Raffinatorgefäß 3 gebildeten, heißen Abgase 19 geraten zuerst in das Ofengefäß 1 und vermischen sich mit den dort entstehenden Abgasen, bevor sie dann durch den Vorwärmschacht 5 aufsteigen und die Anlage durch die Abgasleitung 46 im oberen Bereich des Vorwärmschachtes 5 verlassen. Unterwegs werden die Abgase in Abhängigkeit vom örtlichen Wärmebedarf in den verschiedenen Teilen der Anlage bevorzugt mit Sauerstoff 27, gegebenenfalls mit Luft 28 oder Luft/Sauerstoff-Gemischen über die Lanzen 32, 35 und/oder Düsen 47 und teilweise, aber zunehmend nachverbrannt. Dabei sind unter gewissen Einsatzverhältnissen und Prozeßführungsbedingungen hohe Nachverbrennungsgrade von über 60 % technisch realisierbar. Somit wird beim vorliegenden Verfahrens- und Anlagenkonzept der weitaus überwiegende Anteil der chemischen und der fühlbaren Wärme der Abgase 19 an das Metallbad 24 entweder direkt im Raffinatorgefäß 3 und im Ofengefäß 1 oder indirekt durch die Vorwärmung der Einsatzstoffe 7 im Vorwärmschacht 5 übertragen und für den Prozeß unmittelbar genutzt.

Für das erfindungsgemäße Anlagen- und Verfahrenskonzept ergibt sich ein geringerer Verbrauch an elektrischer Energie im Vergleich zum konventionellen Elektro-Lichtbogenofen ohne Schrottvorwärmung (um ca. 25 bis 30 %) und zum diskontinuierlich betriebenen Elektro-Lichtbogenofen mit integrierter Schrottvorwärmung (um ca. 10 bis 15 %) bei jeweils gleichen Einsatzstoffen. Dabei beträgt die Leistungssteigerung im Vergleich zum konventionellen Elektro-Lichtbogenofen ohne Schrottvorwärmung bei etwa gleicher Größe und Ausstattung des Lichtbogenofens (Trafoleistung, Lanzen, Brenner etc.) ca. 50 %.

Die Auslegung der einzelnen Teile der Anlage, wie
- Ofengefäß 1
- Vorwärmschacht 5 und seitliche Chargierschächte 10
- Raffinatorgefäß 3 und
- Dekantiergefäß 2
erfolgt in Abhängigkeit von
- den zu verwendenden Einsatzstoffen, insbesondere Eisenträgern 7 (Form, Größe, Zusammensetzung, Temperatur und Aggregatzustand)
- der erwünschten Produktionsleistung
- den Ansprüchen bezüglich der Stahlqualität
- der erwünschten Betriebsweise der Anlage (kontinuierlich oder semi-kontinuierlich - mit diskontinuierlichem Abstich), auch im Hinblick auf die erwünschte Integration mit vor - und/oder nachgeschalteten Anlagen (z.B. für Roheisengewinnung, Direktreduktion, sekundärmetallurgische Behandlung, Strangguß etc.)
- der Art und Preise der zur Verfügung stehenden Energiequellen.

Das Hauptziel bei der Auslegung ist es, die Prozeßteilschritte Vorwärmen, Chargieren, Schmelzen bzw. Schmelzreduktion, Frischen, Aufheizen und Abstechen innerhalb der Anlage gleichzeitig, jedoch örtlich versetzt und somit voneinander möglichst unabhängig in verschiedenen Anlagenteilen bei kontrollierbarem Ablauf unter jeweils günstigen physikalisch-chemischen, reaktions-kinetischen und wärmetechnischen Bedingungen durchzuführen, d.h. eine Gesamtanlage aus nahezu perfekt (hoch-effektiv) arbeitenden Teilreaktoren für den konkreten Anwendungsfall zu erhalten.

Die erfindungsgemäße Konfiguration der Anlage ermöglicht ein voneinander unabhängiges Entleeren des Anlagenbereiches, bestehend aus Ofengefäß 1 und Dekantiergefäß 2 (über die Abstichöffnung 43) und des Raffinatorgefäßes 3 über die Abstichöffnung 41 ohne ein Kippen der Gesamtanlage zu erfordern, wodurch Kontroll- und Reparaturarbeiten im Heißzustand eines jeden dieser beiden Bereiche ohne Unterbrechung des Prozeßablaufes im jeweils benachbarten Bereich durchführbar sind. Erfindungsgemäß sind alle Teile der Anlage während des Betriebes miteinander und als Einheit fest verriegelt bzw. nicht bewegbar oder kippbar. Durch eine bevorzugte Sektionsausführung sowohl des Untergefäßes als auch des Deckels 4 und 37 der Anlage kann - nach seitlichem Ausfahren (gilt auch für den Vorwärmschacht 5 und die Chargierschächte 10) - der Austausch einzelner reparaturbedürftiger Gefäße, wie des Raffinatorgefäßes 3, des Ofengefäßes 1 und/oder des Dekantiergefäßes 2, bzw. anderer Anlagenteile vorgenommen werden.

Die in Fig. 1 dargestellte Konfiguration der Anlage ist erfindungsgemäß bevorzugt für einen kontinuierlichen Betrieb mit Durchlaufbad, das sich über die gesamte Länge der Anlage erstreckt, vorgesehen. Ein solches Durchlaufbad ist bei hohem Anteil an kohlenstoffreichen Eisenträgern im Einsatz (z.B. bei einem Einsatz aus 30 % Stahlschrott + 30 % Eisenschwamm + 40 % flüssigem Roheisen) einstellbar. Aber auch ein unterschiedliches Metallbadniveau im Ofengefäß und im Raffinator ist möglich.

Einige erfindungsgemäß bevorzugte Konfigurationen einer Anlage für alternative Einsatzverhältnisse sind in den Fig. 4 bis 6 dargestellt, wobei
- die Anlagenkonfiguration gemäß Fig. 4 alternativ zu Fig. 1 - für einen kontinuierlichen Betrieb mit Durchlaufbad bei einem Einsatzanteil an flüssigem Roheisen von mindestens 30 % vorgesehen ist;
- die Anlagenkonfiguration gemäß Fig. 5 für kontinuierlichen oder semi-kontinuierlichen Betrieb bei einem Einsatzanteil an flüssigem Roheisen bis ca. 30 % max. bestimmt ist; beim semi-kontinuierlichen Betrieb wird das Raffinatorgefäß 3 chargenweise abgestochen; bei einem Einsatzanteil an flüssigem Roheisen < 15 % und ohne direkte Zuführung von festen Kohlenstoffträgern 13, 13' in das Raffinatorgefäß 3 ist ein beheiztes, zum Raffinatorgefäß nachgeschaltetes Gefäß, z.B. ein Pfannenofen 49, als Option vorgesehen;
- die Anlagenkonfiguration gemäß Fig. 6 für den Grenzfall eines kontinuierlichen Schmelzprozesses ohne Einsatz von flüssigem Roheisen 20, wobei wegen des Wegfalles eines Großteiles der Frischarbeit ein nach der Art einer Pfanne ausgebildetes Raffinatorgefäß 49 mit einem Deckel vorgesehen ist.

Wie die Fig. 4 bis 6 erkennen lassen, beeinflussen die Einsatzverhältnisse vor allem die Form und Größe des Raffinatorgefäßes 3 und des Dekantiergefäßes 2, aber auch die Größe des Vorwärmschachtes 5, die Anzahl, Größe, Anordnung und Anwendung der seitlichen Chargierschächte 10 sowie die für den Elektro-Lichtbogenofen benötigte Trafoleistung. Mit Zunahme des Kohlenstoffgehaltes der eingesetzten Eisenträger 7 und ihres flüssigen Anteiles werden das Raffinatorgefäß 3 und das Dekantiergefäß 2 grundsätzlich schmäler und länger (kanalförmig), wobei die spezifische Trafoleistung des Elektro-Lichtbogenofens abnimmt und umgekehrt. Beim hohen, zunehmenden Anteil an festen Eisenträgern 7 im Einsatz (z.B. im Bereich der Einsatzstoffe von 70 bis 100 % Schrott und/oder direkt-reduzienem Eisen) nimmt das Raffinatorgefäß 3 allmählich die Form eines in Fig. 5 dargestellten kürzeren Behälters bzw., wie in Fig. 6 dargestellt, einer Pfanne 49 an. Die Trafoleistung des Elektro-Lichtbogenofens wird größer. Im Grenzfall 100 % feste Einsatzstoffe kann das Dekantiergefäß stark verkürzt ausgebildet sein.

### Ausführungsbeispiel

Der Einsatz besteht aus 40 % flüssigem Roheisen 20, 30 % Mischschrott 7 und 30 % Eisenschwamm-Pellets 12. Die chemische Zusammensetzung dieser Einsatzstoffe ist aus Tafel 1 ersichtlich.

**Tafel 1:**

| Zusammensetzung und Temperatur der Einsatzstoffe | | | | |
|---|---|---|---|---|
| Flüssiges Roheisen | Mischschrott | Eisenschwamm | Kalk | Mauerung |
| 4,30 % C | 0,20 % C | 85,50 % Fe(met) | 92,8 % CaO | MgO-C-Steine |
| 0,50 % Si | 0,20 % Si | 5,90 % FeO | 2,8 % MgO | |
| 0,50 % Mn | 0,50 % Mn | 2,00 % Fe₂O₃ | 2,7 % SiO₂ | |
| 0,100 % P | 0,020 % P | 1,80 % C | 1,5 % Al₂O₃ | |
| 0,030 % S | 0,020 % S | 0,70 CaO | 0,030 % S | |
| | 1,4 % Asche | 0,40 % MgO | | |
| | | 2,30 % SiO₂ | | |
| | | 1,40 % Al₂O₃ | | |
| | | | | |
| 1330°C | 25°C | 25°C | 25°C | 1550°C (Ofengefäß 1) |
| | | | | 1625°C (Raffinatorgefäß 3) |

Zur Durchführung des Verfahrens dient eine Anlage, die gemäß Fig. 1 für eine Stundenleistung von ca. 150 t Rohstahl folgenderweise ausgelegt ist:
a) Ofengefäß 1:
   - ca. 6 m Durchmesser
   - 55 MVA Trafoleistung
   - 4 Stk. Graphitelektroden 16 (⌀ 350 mm, innerhalb eines Neigungswinkels von 0 bis 30° in der jeweiligen Vertikalebene ausschwenkbar)
   - eine Bodenanode 17
   - eine Roheisenrinne 21 für kontinuierliche Zuführung von flüssigem Roheisen 20
   - eine Kontroll- und Reparaturtür 22
   - 1 Stk. Lanzenmanipulator 23 (durch die Tür 22).
   - 4 Stk. Sauerstofflanzen 32 aus selbstverzehrenden Rohren durch die Seitenwände des Ofengefäßes 1 (Lanzen-⌀ 1", Sauerstoffdruck am Eingang ≥ 5 bar)
   - 4 Stk. Bodenspülsteine 33 für Inertgas 30 (N₂/Ar in beliebigen Mengenverhältnissen einstellbar), max. Gasdurchfluß von ca. 200 Nl/min pro Spülstein 33 (ca. 800 Nl/min max. Inertgasdurchfluß im Ofengefäß 1)
   - ca. 5 bis 6 ° Bodenneigung in Richtung des Reserve-Abstichloches 48 im Dekantiergefäß 2
b) Ein Vorwärmschacht 5 zur Vorwärmung und anschließendem Chargieren des Mischschrotts 7 in das Ofengefäß 1
   - oktogonaler, konstanter Schachtquerschnitt (ca. 2,5 m lichte Weite)
   - ca. 4 m Schachthöhe
   - Gesamtvolumen ca. 25 m³, davon ca. 17,5 m³ Nutzvolumen (Fassungsvermögen ca. 12 t Mischschrott 7)
   - mit Bandbeschickung 8, gasdurchlässigen wassergekühlten Absperrorganen 6 (Schrotthaltevorrichtung) und eine Abgasleitung 46, jedoch ohne Nachverbrennungsdüsen 47
c) 3 Stk. seitliche Chargierschächte 10 für Eisenschwamm-Pellets 12 und Stückkalk 14 (kein seitlicher Chargierschacht 10 an der Seite des Dekantiergefäßes 2 bzw. der Öffnung 9 zur Befüllung des Vorwärmschachtes 5 mit Mischschrott 7)
   - rechteckiger Querschnitt 1200 x 600 mm
   - 3,5 m Höhe
   - ca. 2,2 m Nutzvolumen eines Chargierschachtes 10 (Fassungsvermögen der drei Chargierschächte 10 ca. 12 t Eisenschwamm-Pellets 12
   - wassergekühlte und gasdichte Absperrorgane 11 an der Einmündung in das Ofengefäß 1
   - Beschickung der drei Chargierschächte 10 über ein gemeinsames Förderband 15 und eine Verteiler-Rutsche (die Verteiler-Rutsche ist in Fig. 1 nicht dargestellt)
d) Raffinatorgefäß 3
   - ca. 1,9 m Breite, ca. 6,0 in Länge, ca. 8 bis 9° Bodenneigung in Richtung des Rohstahl-Abstichloches 41 (der durchschnittliche, eckige Querschnitt des Raffinatorgefäßes 3 bezüglich Mauerung beträgt ca. 3 m²)
   - 4 Stk. wassergekühlte Sauerstofflanzen 35 (jeweils 1-Loch-Lanzen, ca. 1" Durchmesser der Lanzendüse, ca. 10 bar Sauerstoffdruck am Eingang), mittig am Deckel 37 des Raffinatorgefäßes 3 in Abständen von ca. 1,5 m voneinander bzw. ca. 0,75 m von den schmalen Raffinatorseiten angeordnet, in die Vertikalrichtung einzeln beweglich und ebenfalls einzeln innerhalb eines Neigungswinkels von 0 bis ca. 30° in bzw. gegen die Fließrichtung des Metalles 24 ausschwenkbar
   - 6 Stk. Bodenspülsteine 36 für Inertgas 30 (N₂/Ar in beliebigen Mengenverhältnissen einstellbar), paarweise (3 Paare) in den Abständen zwischen den Lanzen 35 im flachen Bodenbereich des Raffinatorgefäßes 3 angeordnet
   - max. Gasdurchfluß von ca. 200 Nl/min pro Spülstein 36 (ca. 1200 N l/min max. Inertgasdurchfluß im Raffinatorgefäß 3)
   - ein Abstichloch für Rohstahl 41
   - zwei Schlackentüren 45
   - ein Schlackendamm 44
   - zwei Kontroll-/Reparaturtüren 50
e) Dekantiergefäß 2
   - ca. 1,9 m Breite, ca. 0,9 m Länge, mit einem nahezu konstanten, eckigen Querschnitt von ca. 2,5 m² bezüglich Mauerung
   - 2 Stk. Bodenspülsteine 33 (1 Paar) im flachen Bodenbereich des Dekantiergefäßes 2, max. Gasdurchfluß von ca. 200 N l/min pro Spülstein 33 (ca. 400 N l/min max. Inertgasdurchfluß im Dekantiergefäß 2)
   - ein Abstichloch 48 (wird nur zum Entleeren des Ofengefäßes 1 und des Dekantiergefäßes 2 verwendet)
   - eine Schlackentür 43 für den Abstich der Schlacke 12.

Im vorliegenden Fall erfolgt der erfindungsgemäße Prozeßablauf
- mit einem Durchlaufbad über die gesamte Länge der Anlage
- bei Gegenstrombewegung von Metall 24 und Schlacke 25
- mit Schaumschlacke 25 im Ofengefäß 1 bzw. im Dekantiergefäß 2
- bei kontinuierlichem Abstich des Rohstahles 24 über das Abstichloch 41 und der Schlacke 25 über die Schlackentür 43
unter quasi-stationären Prozeßbedingungen bezüglich
- Konzentrations- und Temperaturprofile
- Stoff- und Wärmeflüsse sowie
- Füllungsgrade bzw. Badspiegelhöhe
in jedem einzelnen Teil der Anlage.

Dieser Prozeßablauf zur kontinuierlichen Erzeugung von ca. 150 t/h (ca. 2,5 t/min) Rohstahl mit der Anlage wird durch die folgende Prozeßführung gewährleistet.

Während einer ersten Vorbereitungsphase wird in den Anlagenteilen 1 bis 3 ein Durchlaufbad 24 als notwendige Startbedingung für den nächsten kontinuierlichen Betrieb erzeugt. Dafür werden ca. 90 t flüssiges Roheisen 20 über die Roheisenrinne 21 und ca. 45 t Mischschrott 7 über den Vorwärmschacht 5 (Mischschrott 7 in vier Portionen je 11 bis 12 t) in das Ofengefäß 1 chargiert, wobei ca. zwei Drittel des flüssigen Roheisens 20 mit nur wenig Schrottstücken in das benachbarte Raffinatorgeäß 3 bei geschlossenem Abstichloch 41 überfließt. Innerhalb der nächsten ca. 40 bis 45 min wird das Bad im Raffinatorgefäß 3 über die Sauerstofflanzen 35 gefrischt bzw. aufgeheizt. während im Ofengefäß 1 unter Stromzuführung und Anwendung der Sauerstofflanzen 32 niedergeschmolzen, gefrischt und ebenfalls aufgeheizt wird. Die im Raffinatorgefäß 3 gebildete Frischschlacke 25 wird mit Hilfe des Schlackendammes 44 ausschließlich durch die beiden Schlackentüren 45 kontinuierlich abgestochen. Die im Ofengefäß 1 und Dekantiergefäß 2 gebildete Schlacke 25 fließt durch die Schlackentür 43 ab.

Die Vorbereitungsphase ist abgeschlossen, wenn ein Durchlaufbad mit etwa folgenden Eigenschaften in den zwei Hauptbereichen entlang der Anlage eingestellt ist:
a) im Bereich des Ofengefäßes 1 und des Dekantiergefäßes 2
   - ca. 60 t Semistahl (davon ca. 50 t im Ofengefäß 1 und ca. 10 t im Dekantiergefäß 2)
   - mit der Zusammensetzung und Temperatur
      ca. 1,40 % C ca. 1550°C
      ca. 0,12 % Mn
      Si-Spuren
b) im Bereich des Raffinatorgefäßes 3
   - ca. 60 t Semistahl
   - mit der Zusammensetzung und Temperatur
      ca. 0,05 % C ca. 1650°C
      ca. 0,13 % Mn
      Si-Spuren

Ab diesem Augenblick wird auf kontinuierlichen Betrieb in der Anlage umgeschaltet. Der Schlackendamm 44 wird aus dem Raffinatorgefäß 3 völlig ausgezogen und die beiden Schlackentüren 45 werden gesperrt. Es beginnt die kontinuierliche und/oder semikontinuierliche Zuführung der folgenden Stoff- und Energiemengen pro Minute:

| Durchschnittliche Zufuhr pro Minute | erfolgt über |
|---|---|
| a) in das Ofengefäß 1 | |
| • ca. 823 kg Mischschrott 7 | Vorwärmschacht 5*) |
| • ca. 823 kg Eisenschwamm-Pellets 12 und ca. 37,8 kg Stückkalk 14 | drei Chargierschächte 10**) |
| • ca. 1097 kg flüssiges Roheisen 10 | Roheisenrinne 21 |
| • ca. 49 Nm³ O₂ 13 und | vier Sauerstofflanzen 32 |
| ca. 8,3 kg Koks 51 (Schaumschlacke) | eine Manipulatorlanze 23 |
| • ca. 580 kWh (ca. 35 MW) | Elektrische Energie |
| • ca. 0,7 Nm³ Inertgas (N₂/Ar) | vier Bodenspülsteine 33 |
| | |

| b) in das Dekantiergefäß 2 | |
|---|---|
| • ca. 0,3 Nm³ Inertgas 30 (N₂/Ar) | zwei Bodenspülsteine 33 |
| | |

| c) in das Raffinatorgefäß 3 | |
|---|---|
| • ca. 52 Nm³ O₂ 27 | vier Sauerstofflanzen 35 |
| • ca. 41 kg Kalk und ca. 15 kg Quarzsand*) (beide Position 14) | eine Deckelöffnung 39 |
| • ca. 1 Nm³ Inertgas 30 (N₂/Ar) | sechs Bodenspülsteine 36 |

| | |
|---|---|
| *) Portionsweise Zuführung (semi-kontinuierlich): alle 12 min eine Portion von ca. 10 t Mischschrott 7 (5 Portionen x ca. 10 t = ca. 50 t Mischschrott pro Stunde); | |
| **) Entleerung und Wiederbefüllung in einer bestimmten Reihenfolge, so daß während zwei der Chargierschächte 10 entleert werden, der dritte Chargierschacht 10 mit Eisenschwamm-Pellets 12 und Stückkalk 14 befüllt wird | |
| *) zur Verflüssigung der Schlacke im Raffinatorgefäß 3 | |

Nach einer Anlaufphase von ca. 30 min stellt sich in der Anlage ein quasi-stationärer, kontinuierlicher Betrieb unter Erzeugung und Abfuhr der folgenden Produkte pro min:

| Durchschnittliche Menge (pro min), Zusammensetzung und Temperatur | | | Abfuhr über / Richtung |
|---|---|---|---|
| a) im bzw. aus dem Raffinatorgefäß 3 | | | |
| - 2,5 t Rohstahl 24, 1650°C | | | Abstichloch 41 / nachgeschaltete Anlage |
| ca. | 0,05 % C | 0,07 % Mn | |
| | Si-Spuren | | |
| | 0,006 % P | 0,010 % S | |
| | 0,0025 % N | 0,0500 % O | |
| - ca. 86,5 kg Schlacke 25, ca. 1600°C | | | Überlauf zum Ofengefäß 1 |
| ca.: | 21 % FeOₙ | 44 % CaO | |
| | 10,4 % MgO | 18 % SiO₂ | |
| | 1,6 % Al₂O₃ | 3 % MnO | |
| | 0,6 % P₂O₅ | 0,11 % S | |
| - ca. 74 Nm³ Abgas, ca. 1650°C | | | Übergang, zum Ofengefäß 1 |
| ca.: | 52 vol.% CO | 35 Vol.% CO₂ | |
| | 11 Vol.% N₂ | 1,3 Vol. % O₂ | |
| | 0,7 Vol.% Ar | | |

| Durchschnittliche Menge (pro min), Zusammensetzung und Temperatur | | | Abfuhr über / Richtung |
|---|---|---|---|
| a) in bzw. aus dem Ofengefäß 1, dem Dekantiergefäß 2 und dem Vorwärmschacht 5 | | | |
| - 2,57 t Semistahl, ca. 1550°C | | | Überlauf zum Raffinatorgefäß 3 |
| ca. | 1,40 % C | 0,13 % Mn | |
| | Si-Spuren | | |
| | 0,015 % P | 0,015 % S | |
| | 0,0030 % N | 0,0030 % O | |
| - ca. 203 kg Schlacke, ca. 1550°C | | | Schlackentür 43 / außerhalb der Anlage |
| ca.: | 9 % FeOₙ | 39 % CaO | |
| | 11 % MgO | 25 % SiO₂ | |
| | 7 % Al₂O₃ | 5 % MnO | |
| | 1,3 % P₂O₅ | 0,11 % S, ca. 2 % Fe(met) | |
| - ca. 162 Nm³ Abgas, ca. 800°C | | | Abgasleitung 46/ außerhalb der Anlage (nach einer Vorwärmung des Mischschrotts 7 im Vorwärmschacht 5 auf ca. 500°C) |
| ca.: | 41,0 Vol.% CO | 41,0 Vol.% CO₂ | |
| | 16,5 Vol. % N₂ | < 1 Vol.% O₂ | |
| | 0,5 Vol.% Ar | | |

Einige wichtige Prozeßkennzahlen pro Tonne Rohstahl sind:
a) Einsatzstoffe (Ofengefäß 1 + Raffinatorgefäß 3)
   - flüssiges Roheisen 439 kg/t
   - Mischschrott 329 kg/t
   - Eisenschwamm-Pellets 329 kg/t
   - Sauerstoff (Lanzen) 40,5 Nm³/t
   - Inertgas (N₂/Ar) 0,8 Nm³/t
   - Mauerung (Verschleiß) 7,0 kg/t
   - Kalk (92,8 % CaO) 31,5 kg/t
   - Quarzsand 5,9 kg/t
   - Koks (Schaumschlacke) 3,3 kg/t
   - Graphitelektroden 1,0 kg/t
b) Schlacke (% CaO/% SiO₂ = 1,55) 81 kg/t
c) Abgas (Rohgas inklusive Falschluft) 66 Nm³/t
d) Nachverbrennungsgrad im Abgas
   (Rohgas bei ca. 800°C)
   CO zu CO₂ 0,50
   H₂ zu H₂O 0,54
e) Elektrische Energie 230 kWh/t

## Patentansprüche

1. Anlage zum Herstellen von Eisenschmelzen (24), insbesondere von Stahlschmelzen, wie Rohstahlschmelzen, mit
• einem Elektro-Lichtbogen-Ofengefäß (1),
• einem an das Ofengefäß (1) über ein Wehr (34) anschließenden Raffinatorgefäß (3) mit einem vom Wehr (34) zumindest teilweise abfallend ausgehenden Boden und einer Sauerstoff-Zuführeinrichtung (35, 36) sowie einem am vom Ofengefäß (1) entfernter liegenden Endbereich angeordneten Eisenschmelzenabstich (41),
• einem an das Ofengefäß (1) anschließenden und mit dem Ofengefäß (1) einen gemeinsamen Boden (18) aufweisenden Dekantiergefäß (2), das an seinem vom Ofengefäß (1) entfernter liegenden Endbereich mit einem Schlackenabstich (43) versehen ist,
• einer flüssiges Roheisen (20) zuführenden und in das Ofengefäß (1) mündenden Zuführeinrichtung (21),
• einem feste Eisenträger (7) zuleitenden Vorwärmschacht (5), der oberhalb des Ofengefäßes (1) angeordnet ist und über eine gasdurchlässige, gekühlte Absperreinrichtung (6) in das Ofengefäß (1) über dessen Deckel (4) mündet, und
• einem Chargierschacht (10), der oberhalb des Ofengefäßes (1) angeordnet ist und über eine gasundurchlässige gekühlte Absperreinrichtung (11) in das Ofengefäß (1) mündet.

2. Anlage zum Herstellen von Eisenschmelzen (24), insbesondere von Stahlschmelzen, wie Rohstahlschmelzen, mit
• einem Elektro-Lichtbogen-Ofengefäß (1),
• einem an das Ofengefäß (1) über ein Wehr (34) anschließenden, nach der Art einer Pfanne (49) ausgebildeten Raffinatorgefäß (3) mit einem Deckel, in dessen Deckelbereich das zwischen dem Ofengefäß (1) und dem Raffinatorgefäß (3) vorgesehene Wehr (34) vorgesehen ist, mit einer Sauerstoff-Zuführeinrichtung (35, 36) sowie einem Eisenschmelzenabstich (41),
• einem an das Ofengefäß (1) anschließenden und mit dem Ofengefäß (1) einen gemeinsamen Boden (18) aufweisenden Dekantiergefäß (2), das an seinem vom Ofengefäß (1) entfernter liegenden Endbereich mit einem Schlackenabstich (43) versehen ist,
• einer flüssiges Roheisen (20) zuführenden und in das Ofengefäß (1) mündenden Zuführeinrichtung (21),
• einem feste Eisenträger (7) zuleitenden Vorwärmschacht (5), der oberhalb des Ofengefäßes (1) angeordnet ist und über eine gasdurchlässige, gekühlte Absperreinrichtung (6) in das Ofengefäß (1) über dessen Deckel (4) mündet, und
• einem Chargierschacht (10), der oberhalb des Ofengefäßes (1) angeordnet ist und über eine gasundurchlässige gekühlte Absperreinrichtung (11) in das Ofengefäß (1) mündet.

3. Anlage nach Anspruch 1 oder 2, dadurch gekennzeichnet, daß der Vorwärmschacht (5) zentral oberhalb des Ofengefäßes (1) angeordnet ist und der Deckel (4) des Ofengefäßes (1) ringförmig, den Vorwärmschacht (5) umgebend und diesen mit Seitenwänden des Ofengefäßes (1) verbindend, ausgestaltet ist, wobei Elektroden (16), vorzugsweise Graphitelektroden, schräg durch den Deckel (4) in das Innere des Ofengefäßes (1) ragen.

4. Anlage nach Anspruch 3, dadurch gekennzeichnet, daß die Elektroden (16) schwenkbar und gegebenenfalls in Richtung ihrer Längsachse längsverschieblich gelagert sind, u.zw. unter Veränderung des zwischen einer Vertikalen und einer Mittelachse der Elektroden (16) vorhandenen Neigungswinkels.

5. Anlage nach Anspruch 3 oder 4, dadurch gekennzeichnet, daß die Elektroden (16) unter Veränderung des zwischen einer Vertikalen und einer Mittelachse der Elektroden (16) vorhandenen Neigungswinkels in einem Bereich von 0 bis 30° in Richtung des Zentrums des Ofengefäßes (1) und bis zu 10° in die umgekehrte Richtung zur Wand des Ofengefäßes (1) hin schwenkbar gelagert sind.

6. Anlage nach Anspruch 4 oder 5, dadurch gekennzeichnet, daß die Elektroden (16) kathodisch geschaltet sind und im Boden (18) des Ofengefäßes (1) mittig eine Bodenanode (17) angeordnet ist.

7. Anlage nach einem oder mehreren der Ansprüche 1 bis 6, dadurch gekennzeichnet, daß die Elektroden (16) als Hohlelektroden ausgebildet sind und entweder an eine Eisenträger-Zuführeinrichtung und/oder eine Kohle- bzw. Kohlenstoffträger-Zufuhreinrichtung und/oder eine Zufuhreinrichtung für eine aufbereitete organische Leichtfraktion und/oder eine Schlackenbildner-Zufuhreinrichtung und/oder eine Kohlenwasserstoff-Zuführeinrichtung und/oder eine Inertgas-Zufuhreinrichtung angeschlossen sind.

8. Anlage nach einem oder mehreren der Ansprüche 1 bis 7, dadurch gekennzeichnet, daß in den Innenraum des Ofengefäßes (1) mündende Düsen (33) und/oder Lanzen (32) vorgesehen sind, die entweder an eine Eisenträger-Zufuhreinrichtung und/oder eine Kohle- bzw. Kohlenstoffträger-Zufuhreinrichtung und/oder eine Zuführeinrichtung für eine aufbereitete organische Leichtfraktion und/oder eine Schlackenbildner-Zuführeinrichtung und/oder eine Sauerstoff- bzw. ein sauerstoffhältiges Gas zuführende Zuführeinrichtung und/oder eine Kohlenwasserstoff-Zufuhreinrichtung und/oder eine Inertgas-Zuführeinrichtung angeschlossen sind.

9. Anlage nach Anspruch 8, dadurch gekennzeichnet, daß die Lanzen (32) beweglich angeordnet sind.

10. Anlage nach Anspruch 8 oder 9, dadurch gekennzeichnet, daß die Lanzen (32) schwenkbar und/oder in ihrer Längsrichtung bewegbar sind.

11. Anlage nach einem oder mehreren der Ansprüche 1 bis 10, dadurch gekennzeichnet, daß im Raffinatorgefäß (3) Düsen (36) und/oder Lanzen (35) angeordnet sind, die entweder an eine Eisenträger-Zufuhreinrichtung und/oder eine Kohle- bzw. Kohlenstoffträger-Zufuhreinrichtung und/oder eine Zufuhreinrichtung für eine aufbereitete organische Leichtfraktion und/oder eine Schlackenbildner-Zufuhreinrichtung und/oder eine Sauerstoff-bzw. ein sauerstoffhältiges Gas zuführende Zufuhreinrichtung und/oder eine Kohlenwasserstoff-Zufuhreinrichtung und/oder eine Inertgas-Zufuhreinrichtung angeschlossen sind.

12. Anlage nach Anspruch 11, dadurch gekennzeichnet, daß die Düsen (36) als Unterbaddüsen und/oder Bodenspülsteine ausgebildet sind.

13. Anlage nach Anspruch 11 oder 12, dadurch gekennzeichnet, daß die Lanzen (35) beweglich angeordnet sind.

14. Anlage nach einem der Ansprüche 11 bis 13, dadurch gekennzeichnet, daß die Lanzen (35) verschwenkbar und/oder in ihrer Längsrichtung bewegbar sind.

15. Anlage nach einem oder mehreren der Ansprüche 1 bis 14, dadurch gekennzeichnet, daß das Ofengefäß (1) mit einem in Richtung des Dekantiergefäßes (2) hin abfallenden Boden (18) ausgestattet ist und in einen etwa horizontal liegenden Bodenteil des Dekantiergefäßes übergeht, wobei die tiefste Stelle des Bodens im Dekantiergefäß (2) angeordnet ist.

16. Anlage nach Anspruch 15, dadurch gekennzeichnet, daß an der tiefsten Stelle des Bodens (18) des Dekantiergefäßes (2) eine Abstichöffnung (48) vorgesehen ist.

17. Anlage nach einem oder mehreren der Ansprüche 1 bis 16, dadurch gekennzeichnet, daß das Raffinatorgefäß (3) mit mindestens einer Kontroll- und/oder Reparaturöffnung (50) versehen ist.

18. Anlage nach einem oder mehreren der Ansprüche 1 bis 17, dadurch gekennzeichnet, daß das Raffinatorgefäß (3) als vom Ofengefäß (1) abtrennbare und austauschbare Baueinheit ausgebildet ist.

19. Anlage nach einem oder mehreren der Ansprüche 1 bis 18, dadurch gekennzeichnet, daß im Bereich des Überganges vom Ofengefäß (1) zum Raffinatorgefäß (3) ein weiterer Schlackenabstich (45) sowie ein entfernbarer Schlackendamm (44) vorgesehen sind.

20. Anlage nach einem oder mehreren der Ansprüche 1 bis 19, dadurch gekennzeichnet, daß der Vorwärmschacht (5) und/oder der Chargierschacht (10) als vom Ofengefäß (1) abtrennbare und austauschbare Einheit ausgeführt ist (sind).

21. Verfahren zum Herstellen von Eisenschmelzen, insbesondere von Stahlschmelzen, wie Rohstahlschmelzen, unter Verwendung einer Anlage nach einem oder mehreren der Ansprüche 1 bis 20, gekennzeichnet durch die Kombination folgender Merkmale:
• Chargieren von flüssigem Roheisen (20) mittels einer Zuführeinrichtung (21) in einer Menge von 0 % bis 70 % der Gesamtmenge der einzusetzenden Eisenträger in das Ofengefäß (1),
• Einschmelzen von Schrott (7) und/oder anderen festen Eisenträgern mit oxidischem Eisenanteil (12) im Ofengefäß (1), im wesentlichen in einer den Roheiseneinsatz zum Gesamteinsatz ergänzenden Menge, wobei
• der Schrott (7) zunächst in den Vorwärmschacht (5) chargiert wird
• und durch Abziehen von beim Herstellen der Eisenschmelze (24) entstehenden heißen Abgasen (19) und Einleiten der Abgase (19) in den den vorzuwärmenden Schrott (7) aufnehmenden Vorwärmschacht (5) vorgewärmt wird und
• anschließend in das Ofengefäß (1) chargiert wird, und wobei weiters
• die festen stückigen Eisenträger (12) zunächst in den Chargierschacht (10) chargiert werden und von dort ohne Vorwärmung, jedoch gegebenenfalls im Heißzustand, in das Ofengefäß (1) chargiert werden, während feinkörnige Eisenträger (12') über Lanzen (32, 35) und/oder Düsen (33, 36) und/oder Hohlelektroden (16) ins Ofengefäß (1) und/oder Raffinatorgefäß (3) zugeführt werden,
• die im Ofengefäß (1) eingesetzten Eisenträger (7, 12 und/oder 12') mittels Elektro-Lichtbogenenergie eingeschmolzen werden und sich mit dem flüssigen Roheisen (20) vermischen,
• die dabei entstandene Eisenschmelze (24) über das Wehr (34) durch das Raffinatorgefäß (3) zu dem Eisenschmelzenabstich (41) fließt und sowohl im Ofengefäß (1) als auch im Raffinatorgefäß (3) kontinuierlich gefrischt und zugleich aufgeheizt wird, und
• Schlacke (25) in zur Fließrichtung (38) der Eisenschmelze (24) entgegengesetzter Richtung (42) zu dem Schlackenabstich (43) fließen gelassen wird und kontinuierlich bezüglich FeO-Gehalt reduziert und zugleich abgekühlt wird.

22. Verfahren nach Anspruch 21, dadurch gekennzeichnet, daß als andere feste Eisenträger mit oxidischem Eisenanteil (12) direktreduzierter Eisenschwamm, heißbrikettierter Eisenschwamm, Eisenkarbid, vorreduziertes Erz oder Staubbriketts eingesetzt werden.

23. Verfahren nach Anspruch 21 oder 22, dadurch gekennzeichnet, daß Prozeßgase durch Zuführen eines sauerstoffhältigen Gases (27) in die und/oder auf die Schlacke (25) und/oder oberhalb derselben in das Raffinatorgefäß (3), in das Ofengefäß (1) und/oder in den Vorwärmschacht (5) nachverbrannt werden.

24. Verfahren nach einem der Ansprüche 21 bis 23, dadurch gekennzeichnet, daß das Schmelzen des Schrotts (7) durch Einblasen eines sauerstoffhältigen Gases (27) unterstützt wird.

25. Verfahren nach Anspruch 21, dadurch gekennzeichnet, daß
• die Zuführung der Einsatzstoffe,
• Schmelz-, Frisch- und Aufheizvorgänge und
• Abfuhr der Prozeßprodukte
in den Vorwärmschacht (5) und/oder die Chargierschächte (10) und/oder das Ofengefäß (1) und/oder das Dekantiergefäß (2) und/oder das Raffinatorgefäß (3)
• kontinuierlich oder semikontinuierlich mit diskontinuierlichem Rohstahlabstich vom Raffinatorgefäß (3) und
• ohne Beeinflussung oder Unterbrechung des Prozeßablaufes im unmittelbar vor- oder nachgeschalteten Anlagenteil
durchgeführt wird.

26. Verfahren nach Anspruch 25, dadurch gekennzeichnet, daß als Einsatzstoffe Eisenträger, Kohlenstoffträger, Zuschläge, aufbereitete organische Leichtfraktion, z.B. Shredder-Leichtfraktion, und Gase eingesetzt werden.

27. Verfahren nach einem oder mehreren der Ansprüche 21 bis 26, dadurch gekennzeichnet, daß der Metallbadspiegel im Raffinatorgefäß (3) niedriger gehalten wird als im Ofengefäß (1).

## Claims

1. A plant for the production of iron melts (24), in particular steel melts, such as crude steel melts, comprising
• an electric arc furnace vessel (1),
• a refining vessel (3) following upon the furnace vessel (1) via a weir (34) and including a bottom departing from the weir (34) in an at least partially downwardly inclined manner and an oxygen supply means (35, 36) as well as an iron melt tap (41) provided in its end region farther remote from the furnace vessel (1),
• a decanting vessel (2) following upon the furnace vessel (1) and having a common bottom (18) with the furnace vessel (1), said decanting vessel being provided with a slag tap (43) in its end region farther remote from the furnace vessel (1),
• a supply means (21) supplying liquid pig iron (20) and opening into the furnace vessel (1),
• a preheating shaft (5) supplying solid iron carriers (7), said preheating shaft being arranged above the furnace vessel (1) and opening into the furnace vessel (1) via its lid (4) via a gas-permeable cooled shut-off means (6), and
• a charging shaft (10) arranged above the furnace vessel (1) and opening into the furnace vessel (1) via a gas-impermeable cooled shut-off means (11).

2. A plant for the production of iron melts (24), in particular steel melts, such as crude steel melts, comprising
• an electric arc furnace vessel (1),
• a refining vessel (3) following upon the furnace vessel (1) via a weir (34) and devised in the fashion of a ladle (49), comprising a lid in whose lid region the weir (34) provided between the furnace vessel (1) and the refiner vessel (3) is arranged, an oxygen supply means (35, 36) as well as an iron melt tap (41),
• a decanting vessel (2) following upon the furnace vessel (1) and having a common bottom (18) with the furnace vessel (1), said decanting vessel being provided with a slag tap (43) in its end region farther remote from the furnace vessel (1),
• a supply means (21) supplying liquid pig iron (20) and opening into the furnace vessel (1),
• a preheating shaft (5) supplying solid iron carriers (7), said preheating shaft being arranged above the furnace vessel (1) and opening into the furnace vessel (1) via its lid (4) via a gas-permeable cooled shut-off means (6), and
• a charging shaft (10) arranged above the furnace vessel (1) and opening into the furnace vessel (1) via a gas-impermeable cooled shut-off means (11).

3. A plant according to claim 1 or 2, characterized in that the preheating shaft (5) is arranged centrally above the furnace vessel (1) and the lid (4) of the furnace vessel (1) is designed to be annular so as to surround the preheating shaft (5) and connect the same with side walls of the furnace vessel (1), wherein electrodes (16), preferably graphite electrodes, project into the interior of the fumace vessel (1) through the lid (4) in an oblique manner.

4. A plant according to claim 3, characterized in that the electrodes (16) are mounted so as to be pivotable and optionally displaceable longitudinally in the direction of their longitudinal axes while changing the angle of inclination between a vertical line and a central axis of the electrodes (16).

5. A plant according to claim 3 or 4, characterized in that the electrodes (16) are mounted so as to be pivotable while the angle of inclination between a vertical line and a central axis of the electrodes (16) is changed within a range of 0 to 30° in the direction of the centre of the furnace vessel (1) and up to 10° in the opposite direction towards the wall of the furnace vessel (1).

6. A plant according to claim 4 or 5, characterized in that the electrodes (16) are switched cathodically and a bottom anode (17) is arranged in the center of the bottom (18) of the furnace vessel (1).

7. A plant according to one or several of claims 1 to 6, characterized in that the electrodes (16) are configured as hollow electrodes and are connected either to an iron carrier supply means and/or a coal or carbon carrier supply means and/or a supply means for treated organic light fraction and/or a slag former supply means and/or a hydrocarbon supply means and/or an inert gas supply means.

8. A plant according to one or several of claims 1 to 7, characterized in that nozzles (33) and/or lances (32) opening into the interior of the furnace vessel (1) are provided, which are connected either to an iron carrier supply means and/or a coal or carbon carrier supply means and/or a supply means for treated organic light fraction and/or a slag former supply means and/or a supply means supplying oxygen or an oxygen-containing gas and/or a hydrocarbon supply means and/or an inert gas supply means.

9. A plant according to claim 8, characterized in that the lances (32) are mounted so as to be movable.

10. A plant according to claim 8 or 9, characterized in that the lances (32) are pivotable and/or displaceable in their longitudinal directions.

11. A plant according to one or several of claims 1 to 10, characterized in that nozzles (36) and/or lances (35) are arranged in the refining vessel (3), which are connected either to an iron carrier supply means and/or a coal or carbon carrier supply means and/or a supply means for treated organic light fraction and/or a slag former supply means and/or a supply means supplying oxygen or an oxygen-containing gas and/or a hydrocarbon supply means and/or an inert gas supply means.

12. A plant according to claim 11, characterized in that the nozzles (36) are configured as sub-bath nozzles and/or bottom flushing bricks.

13. A plant according to claim 11 or 12, characterized in that the lances (35) are mounted so as to be movable.

14. A plant according to claims 11 to 13, characterized in that the lances (35) are pivotable and/or displaceable in their longitudinal directions.

15. A plant according to one or several of claims 1 to 14, characterized in that the furnace vessel (1) is equipped with a bottom (18) downwardly inclined in the direction towards the decanting vessel (2), merging into an approximately horizontally located bottom part of the decanting vessel, the lowermost point of the bottom being provided in the decanting vessel (2).

16. A plant according to claim 15, characterized in that a tap opening (48) is provided on the lowermost point of the bottom (18) of the decanting vessel (2).

17. A plant according to one or several of claims 1 to 16, characterized in that the refining vessel (3) is provided with at least one inspection and/or repair opening (50).

18. A plant according to one or several of claims 1 to 17, characterized in that the refining vessel (3) is designed as a structural unit separable from the furnace vessel (1) and exchangeable.

19. A plant according to one or several of claims 1 to 18, characterized in that a further slag tap (45) as well as a detachable slag dam (44) are provided in the region of the transition from the furnace vessel (1) to the refining vessel (3).

20. A plant according to one or several of claims 1 to 19, characterized in that the preheating shaft (5) and/or the charging shaft (10) is/are configured as a unit separable from the furnace vessel (1) and exchangeable.

21. A process for the production of iron melts, in particular steel melts, such as crude steel melts, using a plant according to one or several of claims 1 to 20, characterized by the combination of the following characteristic features:
• charging of liquid pig iron (20) into the furnace vessel (1) in an amount of from 0% to 70% of the total amount of the iron carriers to be charged,
• melting of scrap (7) and/or other solid iron carriers having an oxidic iron portion (12) in the furnace vessel (1) substantially in an amount complementing the pig iron charge to the total charge, wherein
• the scrap (7) at first is charged into the preheating shaft (5)
• and is preheated by drawing off hot offgases (19) formed in the production of the iron melt (24) and injecting said offgases (19) into the preheating shaft (5) containing the scrap (7) to be preheated and
• subsequently is charged into the furnace vessel (1), and wherein, furthermore,
• the solid lumpy iron carriers (12) at first are charged into the charging shaft (10) and from there are charged into the furnace vessel (1) without preheating, yet optionally in the hot state, while supplying fine grained iron carriers (12') into the furnace vessel (1) and/or refining vessel (3) through lances (32, 35) and/or nozzles (33, 36) and/or hollow electrodes (16),
• the iron carriers (7, 12 and/or 12') charged into the furnace vessel (1) are melted by means of electric arc energy, thus mixing with the liquid pig iron (20),
• the iron melt (24) formed therein flows through the refining vessel (3) to the iron melt tap (41) via the weir (34), being continuously refined and simultaneously heated both in the furnace vessel (1) and in the refining vessel (3), and
• slag (25) is allowed to flow to the slag tap (43) in a direction (42) opposite to the flow direction (38) of the iron melt (24), being continuously reduced in respect of its FeO content and simultaneously cooled.

22. A process according to claim 21, characterized in that directly reduced sponge iron, hot briquetted sponge iron, iron carbide, pre-reduced ore or dust briquettes are used as said other solid iron carriers having an oxidic iron portion (12).

23. A process according to claim 21 or 22, characterized in that process gases are afterburnt by feeding an oxygen-containing gas (27) into and/or onto the slag (25) and/or above the same into the refining vessel (3), into the furnace vessel (1) and/or into the preheating shaft (5).

24. A process according to any one of claims 21 to 23, characterized in that melting of the scrap (7) is assisted by blowing in an oxygen-containing gas (27).

25. A process according to claim 21, characterized in that
• the supply of the charging substances,
• the melting, refining and heating procedures, and
• the discharge of the process products
are carried out into the preheating shaft (5) and/or into the charging shafts (10) and/or into the furnace vessel (1) and/or into the decanting vessel (2) and/or into the refining vessel (3)
• continuously or semi-continuously with discontinuous crude steel tapping from the refining vessel (3) and
• without influencing or interrupting the process course in the immediately preceding or following plant part.

26. A process according to claim 25, characterized in that iron carriers, carbon carriers, fluxes, treated organic light fraction, e.g. shredder light fraction, and gases are used as charging materials.

27. A process according to one or several of claims 21 to 26, characterized in that the metal bath level in the refining vessel (3) is kept lower than that in the furnace vessel (1).

## Revendications

1. Dispositif de fabrication de fer en fonte (24), en particulier d'acier en fonte, tel que de l'acier en lingots, comprenant
• une enveloppe de four à arc électrique (1),
• une cuve d'affinage (3) se rattachant à l'enveloppe de four (1) par l'intermédiaire d'un déversoir (34), comprenant un fond partant depuis le déversoir (34) de façon au moins partiellement inclinée, et un dispositif d'amenée d'oxygène (35, 36), ainsi qu'une percée de fer en fonte (41) agencée à hauteur d'une zone d'extrémité se situant à l'écart de l'enveloppe du four (1),
• un réservoir de décantation (2) se rattachant à l'enveloppe de four (1) et présentant un fond (18) commun avec l'enveloppe de four (1), le réservoir de décantation étant pourvu d'un trou de coulée de laitier (43) à hauteur de sa zone d'extrémité se situant à l'écart de l'enveloppe du four (1),
• un dispositif d'amenée (21) amenant du fer brut liquide (20) et débouchant dans l'enveloppe de four (1),
• un conduit de préchauffage (5), qui amène un porteur de fer solide (7), qui est agencé au-dessus de l'enveloppe de four (1) et qui débouche par l'intermédiaire d'un dispositif d'obturation (6) perméable au gaz et refroidi dans l'enveloppe de four (1) par le couvercle (4) de celle-ci, et
• un conduit de chargement (10), qui est agencé au-dessus de l'enveloppe de four (1) et qui débouche dans l'enveloppe de four (1) par l'intermédiaire d'un dispositif d'obturation perméable au gaz et refroidi (11).

2. Dispositif de fabrication de fer en fonte (24), en particulier d'acier en fonte, tel que de l'acier en lingots, comprenant
• une enveloppe de four à arc électrique (1),
• une cuve d'affinage (3) réalisé à la façon d'une poche, se rattachant à l'enveloppe de four (1) par l'intermédiaire d'un déversoir (34) et comprenant un couvercle dans la zone duquel est prévu le déversoir (34) entre l'enveloppe du four (1) et la cuve d'affinage, ainsi qu'un dispositif d'amenée d'oxygène (35, 36), et une percée de fer en fonte (41),
• un réservoir de décantation (2) se rattachant à l'enveloppe de four (1) et présentant un fond (18) commun avec l'enveloppe de four (1), le réservoir de décantation étant pourvu d'un trou de coulée de laitier (43) à hauteur de sa zone d'extrémité se situant à l'écart de l'enveloppe de four (1),
• un dispositif d'amenée (21) amenant du fer brut liquide (20) et débouchant dans l'enveloppe de four (1),
• un conduit de préchauffage (5), qui amène un porteur de fer solide (7), qui est agencé au-dessus de l'enveloppe de four (1) et qui débouche, par l'intermédiaire d'un dispositif d'obturation (6) perméable au gaz et refroidi, dans l'enveloppe de four (1) par le couvercle (4) de celle-ci, et
• un conduit de chargement (10), qui est agencé au-dessus de l'enveloppe de four (1) et qui débouche dans l'enveloppe de four (1) par l'intermédiaire d'un dispositif d'obturation perméable au gaz et refroidi (11).

3. Dispositif suivant l'une des revendications 1 ou 2, caractérisé en ce que le conduit de préchauffage (5) est agencé de façon centrale au-dessus de l'enveloppe de four (1) et en ce que le couvercle (4) de l'enveloppe de four (1) est réalisé de façon annulaire, en entourant le conduit de préchauffage (5) et en reliant celui-ci à des parois latérales de l'enveloppe de four (1), des électrodes (16), de préférence des électrodes en graphite, faisant saillie de façon oblique à l'intérieur de l'enveloppe de four (1) à travers le couvercle (4).

4. Dispositif suivant la revendication 3, caractérisé en ce que les électrodes (18) sont montées à pivotement et le cas échéant à déplacement longitudinal suivant la direction de leur axe longitudinal, et cela avec modification d'un angle d'inclinaison qui est présent entre une verticale et un axe médian des électrodes (16).

5. Dispositif suivant l'une des revendications 3 ou 4, caractérisé en ce que les électrodes (16) sont montées à pivotement avec variation d'un angle d'inclinaison qui est présent entre une verticale et un axe médian des électrodes (16) dans une gamme comprise entre 0 et 30° en direction du centre de l'enveloppe de four (1) et jusqu'à 10° dans la direction inverse vers la paroi de l'enveloppe de four (1).

6. Dispositif suivant l'une des revendications 4 ou 5, caractérisé en ce que les électrodes (16) sont montées de façon cathodique et agencées dans le fond (18) de l'enveloppe de four (1) de façon centrée par rapport à une anode de fond (17).

7. Dispositif suivant l'une ou plusieurs des revendications 1 à 6, caractérisé en ce que les électrodes (16) sont réalisées sous la forme d'électrodes creuses et en ce qu'elles sont raccordées soit à un dispositif d'amenée de fer en lingots et/ou à un dispositif d'amenée de charbon et respectivement de porteurs de carbone et/ou à un dispositif d'amenée pour une fraction légère organique traitée et/ou à un dispositif d'amenée d'un fondant de scorification et/ou à un dispositif d'amenée d'hydrocarbure et/ou à un dispositif d'amenée de gaz inerte.

8. Dispositif suivant l'une ou plusieurs des revendications 1 à 7, caractérisé en ce qu'il est prévu des ajutages (33) et/ou des lances (32), qui débouchent dans l'espace intérieur de l'enveloppe de four (1), et qui sont raccordées soit à un dispositif d'amenée de porteurs de fer et/ou à un dispositif d'amenée de charbon et respectivement de porteurs de carbone et/ou à un dispositif d'amenée pour une fraction légère organique traitée et/ou un dispositif d'amenée d'un fondant de scorification et/ou à un dispositif d'amenée d'oxygène et respectivement d'un gaz à teneur en oxygène et/ou à un dispositif d'amenée d'hydrocarbure et/ou à un dispositif d'amenée de gaz inerte.

9. Dispositif suivant la revendication 8, caractérisé en ce que les lances (32) sont agencées de façon déplaçable.

10. Dispositif suivant l'une des revendications 8 ou 9, caractérisé en ce que les lances (32) sont pivotables et/ou déplaçables suivant leur direction longitudinale.

11. Dispositif suivant l'une ou plusieurs des revendications 1 à 10, caractérisé en ce que des ajutages (36) et/ou des lances (35) sont agencées dans la cuve d'affinage (3), qui sont raccordés soit à un dispositif d'amenée de porteurs de fer et/ou à un dispositif d'amenée de charbon et respectivement de porteurs de carbone et/ou à un dispositif d'amenée pour une fraction légère organique traitée et/ou à un dispositif d'amenée d'un fondant de scorification et/ou à un dispositif d'amenée d'oxygène et respectivement d'un gaz à teneur en oxygène et/ou à un dispositif d'amenée d'hydrocarbure et/ou à un dispositif d'amenée de gaz inerte.

12. Dispositif suivant la revendication 11, caractérisé en ce que les ajutages (36) sont réalisés sous la forme d'ajutages de bain inférieur et/ou de pierres de circulation de fond.

13. Dispositif suivant l'une des revendications 11 ou 12, caractérisé en ce que les lances (35) sont agencées de façon déplaçable.

14. Dispositif suivant l'une des revendications 11 à 13, caractérisé en ce que les lances (35) sont pivotantes et/ou déplaçables suivant leur directlon longitudinale.

15. Dispositif suivant l'une ou plusieurs des revendications 1 à 14, caractérisé en ce que l'enveloppe de four (1) est munie d'un fond (18) qui est incliné suivant la direction du réservoir de décantation (2), et qui passe dans une partie de fond du réservoir de décantation se trouvant pratiquement à l'horizontale, l'emplacement le plus profond du fond étant agencé dans le réservoir de décantation (2).

16. Dispositif suivant la revendication 15, caractérisé en ce qu'il est prévu une ouverture de coulée (48) à l'emplacement le plus profond du fond (18) du réservoir de décantation (2).

17. Dispositif suivant l'une ou plusieurs des revendications 1 à 16, caractérisé en ce que la cuve d'affinage (3) est pourvue d'au moins une ouverture d'inspection et de réparation (50).

18. Dispositif suivant l'une ou plusieurs des revendications 1 à 17, caractérisé en ce que la cuve d'affinage (3) est réalisée sous la forme d'une unité modulaire interchangeable et séparable de l'enveloppe du four (1).

19. Dispositif suivant l'une ou plusieurs des revendications 1 à 18, caractérisé en ce qu'un autre trou de coulée de laitier (45) ainsi qu'un piège à crasses amovible (44) sont prévus dans la zone de transition de l'enveloppe de four (1) vers la cuve d'affinage (3).

20. Dispositif suivant l'une ou plusieurs des revendications 1 à 19, caractérisé en ce que le condult de préchauffage (5) et/ou le conduit de chargement (10) est (sont) réalisé(s) sous la forme d'une unité interchangeable et séparable de l'enveloppe de four (1).

21. Procédé de fabrication de fer en fonte, en particulier d'acier en fonte, tel que de l'acier en lingots, avec mise en oeuvre d'un dispositif suivant l'une ou plusieurs des revendications 1 à 20, caractérisé par la combinaison des caractéristiques suivantes:
• chargement de fer brut liquide (20) au moyen d'un dispositif d'amenée (21) suivant une quantité allant de 0 à 70% de la quantité totale de porteur de fer à enfourner dans l'enveloppe de four (1),
• fusion de déchets (7) et/ou d'autres porteurs de fer solides avec une partie de fer oxydé (12) dans l'enveloppe de four (1), essentiellement dans une quantité complétant la charge en fer brut par rapport à la charge d'ensemble, dans laquelle
• les déchets (7) sont d'abord chargés dans le conduit de préchauffage (5),
• et ils sont préchauffés par le départ des fumées (19) chaudes, qui sont produites lors de la fabrication du fer en fonte (24), et par l'introduction des fumées (19) dans le conduit de préchauffage recevant les déchets (7) à préchauffer et
• ils sont ensuite chargés dans l'enveloppe de four (1), et dans laquelle par ailleurs
• les porteurs de fer solides agglomérés (12) sont d'abord chargés dans le conduit de chargement (10) et, de là, ils sont chargés sans préchauffage mais toutefois, le cas échéant, à l'état chaud, dans l'enveloppe de four (1), tandis que les porteurs de fer à grains fins (12') sont amenés par l'intermédiaire de lances (32, 35) et/ou d'ajutages (33, 36) et/ou d'électrodes creuses (16) dans l'enveloppe de four (1) et/ou le réservoir d'affinage (3),
• les porteurs de fer (7, 12 et/ou 12') enfournés dans l'enveloppe de four (1) sont fondus au moyen d'énergie d'arc électrique et se mélangent avec le fer brut liquide (20),
• le fer en fonte ainsi produit (24) s'écoule par le réservoir de raffinage (3) vers la percée de fer en fonte (41) par l'intermédiaire du déversoir (34) et il est continuellement affiné et en même temps réchauffé aussi bien dans l'enveloppe de four (1) que dans la cuve d'affinage (3), et
• on laisse s'écouler les scories (25) vers le trou de coulée de laitier (43) suivant la direction (42) opposée à la direction d'écoulement (38) du fer en fonte (24) et ils sont continuellement réduits par rapport à la teneur en FeO et en même temps refroidis.

22. Procédé suivant la revendication 21, caractérisé en ce que sont utilisés comme autres porteurs de fer solides avec une part de fer oxydé (12) une éponge de fer réduite directement, une éponge en fer agglomérée à chaud, un carbure de fer, un minerai préréduit, ou un aggloméré de poussières.

23. Procédé suivant l'une des revendications 21 ou 22, caractérisé en ce que des gaz du processus sont soumis à une postcombustion par l'amenée d'un gaz à teneur en oxygène (27) dans les et/ou sur les scories (25) et/ou au-dessus de celles-ci dans la cuve d'affinage (3), dans l'enveloppe de four (1) et/ou dans la cuve de préchauffage (5).

24. Procédé suivant l'une des revendications 21 à 23, caractérisé en ce que la fusion des déchets (7) est soutenue par insufflation d'un gaz à teneur en oxygène (27).

25. Procédé suivant la revendication 21, caractérisé en ce que
• l'amenée des matières chargées,
• les opérations de fusion, d'affinage et de réchauffement et
• l'évacuation des produits du processus
sont effectuées dans le conduit de préchauffage (5) et/ou les conduits de chargement (10) et/ou l'enveloppe de four (1) et/ou le réservoir de décantation (2) et/ou la cuve d'affinage (3)
• continuellement ou de façon semi-continue avec une coulée d'acier brut discontinue à partir de la cuve d'affinage (3) et
• sans influence ou interruption du déroulement du processus dans la partie du dispositif montée directement en aval ou en amont.

26. Procédé suivant la revendication 25, caractérisé en ce que sont utilisées comme matières chargées des porteurs de fer, des porteurs de carbone, des poudres fondantes, une fraction légère organique traitée, par exemple une fraction légère de Shredder, et des gaz.

27. Procédé suivant l'une ou plusieurs des revendications 21 à 26, caractérisé en ce que le niveau de bain de métal dans la cuve d'affinage (3) est maintenu plus bas que dans l'enveloppe de four (1).
